# EUROPEAN PATENT SPECIFICATION

(11) **EP 2 495 286 B1**
(45) Date of publication and mention of the grant of the patent: **23.03.2016**
(21) Application number: 10826295.7
(22) Date of filing: 20.10.2010
(51) Int. Cl.: C08L 101/02, C08F 2/50, C08F 4/40, C08K 5/09, C08K 5/16, C08L 33/04, C08L 43/04

(54) **CURABLE COMPOSITION**
HÄRTBARE ZUSAMMENSETZUNG
COMPOSITION DURCISSABLE

(30) Priority: 30.10.2009 JP 2009250982
(43) Date of publication of application: 05.09.2012
(73) Proprietor: KANEKA CORPORATION, Osaka (JP)
(72) Inventor: KOTANI, Jun, Settsu-shi Osaka 566-0072 (JP)
(74) Representative: Hart-Davis, Jason
(86) International application number: PCT/JP2010/006208
(87) International publication number: WO 2011/052158

(56) References cited:
- EP-A1- 2 072 577
- WO-A1-2008/041768
- JP-A- 1 318 028
- JP-A- 2004 315 784
- JP-A- 2005 281 495
- JP-A- 2007 126 513
- JP-A- 2009 173 709
- DATABASE WPI Week 200443 Thomson Scientific, London, GB; AN 2004-453380 XP002725873, & JP 2004 107396 A (SEKISUI CHEM IND CO LTD) 8 April 2004 (2004-04-08)

## Description

### TECHNICAL FIELD

The present invention relates to a curable composition. More particularly, the present invention relates to a curable composition comprising: (I) a vinyl polymer having at least one crosslinkable silyl group on average, (II) a vinyl polymer having at least one ultraviolet-crosslinkable group on average, (III) an ultraviolet polymerization initiator, (IV) an organic acid, and (V) a ketimine compound.

### BACKGROUND ART

Accompanying the reduction in the size and weight and the improvement in the performance of electrical and electronic components in recent years, implementation circuit boards used in various electrical and electronic components have come to have an increasingly high mounting density and to be increasingly used in high-temperature, high-humidity and other harsh environments. In order to protect these circuit boards from rapid temperature changes, moisture, and dust, their surfaces are typically protected with a conformal coating material. Known examples of conformal coating materials include silicone resins, acrylic resins, polyurethane resins, epoxy resins and polyimide resins. However, the silicone resins have problems with productivity due to the considerable amount of time required for curing, are disadvantageously susceptible to cure inhibition caused by solder flux on the circuit board, and also have the problem that a low molecular weight silicon compound (s) exuded from the cured product may stain the surrounding environment and cause contact faults.

The acrylic resins offer easy handling and have superior electrical and physical properties; however, they have poor resistance to solvent. Moreover, although solvent-diluted acrylic resins have conventionally been used, they allow a large amount of the solvent to evaporate during application, thereby leading to numerous problems such as the risk of fire, unpleasant odor from the volatile solvent, and the requirement of the health management of workers with respect to poisoning. Although studies have been conducted on the use of an aqueous acrylic resin in order to solve these problems, the resin still contains 5% to 10% of a solvent at the present time because of its inadequate film-forming properties and inadequate durability of the coated film. In addition, since the conventional acrylic resins have a large elastic modulus and place a considerable burden on circuit boards, there is still the risk of causing solder separation and lead wire deformation due to the expansion or contraction of the film caused by changes in environmental temperature. Therefore, these resins are inadequate.

The polyurethane resins have favorable dielectric properties as well as superior moisture resistance and chemical resistance; however, they have the shortcomings of being difficult to provide a cured product having a low elastic modulus as well as undergoing softening degradation when allowed to stand for long periods of time under high-temperature conditions because they are inferior in heat resistance.

The epoxy resins have superior moisture resistance, wear resistance, and chemical resistance; however, they have the problems of a short pot life as well as requiring a long time to cure, and also have the shortcoming of failing to provide a cured product having a low elastic modulus. In addition, the cured products of epoxy resins harden due to oxidative degradation when allowed to stand for long periods of time under high-temperature conditions, and then are subject to cracking or separation when stress is applied to the implementation circuit boards, thereby resulting in the risk of a decrease in reliability. The polyimide resins have superior heat resistance, moisture resistance and chemical resistance; however, they require a high temperature for curing and high cost, thereby placing restrictions on their uses.

Meanwhile, in recent years, conformal coating materials have been required to have a shortened curing time from the viewpoint of improving productivity, and studies have been attempted to introduce an ultraviolet curing reaction. However, since the ultraviolet curing reaction does not allow curing to occur in, for example, shadowed portions which are not exposed to ultraviolet light, and deep portions where light is difficult to reach, there are the problems that the circuit board is stained or the circuit board is unable to be protected, due to, for example, the flowing out of the uncured composition after the curing reaction.

In order to solve these problems, combining the ultraviolet curing reaction with an anaerobic curing reaction or a moisture curing reaction has been proposed. However, compositions that are designed to combine the anaerobic curing reaction have the problem of inferior productivity since these compositions are blocked from air and allowed to be cured only at those locations where metal ions are supplied.

On the other hand, since compositions that are designed to combine the moisture curing reaction are not subject to restrictions as mentioned in the anaerobic curing reaction, numerous such compositions have been proposed thus far. For example, Patent Document 1 proposes an ultraviolet-curable resin obtained by reacting a compound having at least two functional groups that react with isocyanate, in a molecule thereof, with a diisocyanate, and further reacting the resulting product with a compound having a hydroxyl group together with a (meth)acryloyl group in a molecule thereof and a compound having a hydroxyl group and an alkoxysilyl group in a molecule thereof; however, the reaction is complex and the cost is high, and only the hard cured products are disclosed.

Patent Document 2 proposes a rubber-elastic composition composed of a polymer whose linear, rubber-elastic polymer chain has an alkoxysilyl group and a (meth)acryloyl group at both ends thereof, a photopolymerization initiator, and a moisture-curing catalyst; however, the reaction is complex and the cost is high.

Patent Document 3 proposes a resin composition composed of a resin polymer having a hydrolyzable silyl group and a radical-polymerizable (meth) acryloyl group at the end thereof, which has been prepared by an addition reaction that utilizes the difference in reactivity between a primary amine and a secondary amine, a radical polymerization initiator, and a moisture-curing catalyst; however, the reaction is complex and the cost is high.

Patent Document 4 proposes a sealant composition composed of a polyisobutylene having a (meth)acryloyl group and a hydrolyzable silicon group in the molecular chain, a photopolymerization initiator, and a moisture-curing catalyst; however, due to its high viscosity, the composition is unsuitable for use in conformal coating applications requiring thin film coating, and also has the problem that the cured product has low oil resistance.

Since these compositions result in hard cured products as described above, they have inferior followability with respect to changes in environmental temperature. Even if their cured products are more flexible, since the main chain consists of polysiloxane, polyisobutylene, polyether, polyester, polybutadiene, or an acrylonitrile-butadiene copolymer, there are the problems that the heat resistance is comparatively low, and that contact faults attributable to siloxane may occur. Moreover, the step for imparting ultraviolet curability and moisture curability is long, this reaction requires a long period of time at a high temperature, and the cost is high.

In order to overcome these disadvantages, Patent Document 5 proposes a sealant composition composed of an acrylic resin having a (meth)acryloyl group in the molecular chain, an isocyanate silane, an ultraviolet-curing catalyst, and a moisture-curing catalyst; however, as well as being difficult to coat as a thin film as in conformal coating applications, due to the high viscosity, the composition has the problem of the toxicity of isocyanate to workers.

Meanwhile, Patent Document 6 proposes a composition composed of a vinyl polymer having an alkoxysilyl group, a vinyl polymer having an acryloyl group, and a photopolymerization initiator. Since the used polymers which have been synthesized through living radical polymerization allow the molecular weight and molecular weight distribution to be arbitrarily controlled, the polymers have a lower viscosity compared to polymers obtained by ordinary radical polymerization and having the same molecular weight. Moreover, the molecular weight between crosslinks can be increased since the polymers have a functional group at the molecular end. In other words, it is possible to use a polymer having a lower molecular weight than in the case of using an acrylic polymer obtained by ordinary radical polymerization; moreover, since the resulting cured product has improved mechanical properties such as softness and superior elongation, it also offers the advantage of superior followability with respect to changes in environmental temperature. The composition is suitable for conformal coating applications also because it can be coated as a thin film due to its low viscosity, and has superior heat resistance and oil resistance.

However, in the case of using this composition in a conformal coating application, a condensation catalyst may be used to improve curability because of inadequate moisture curability, and then if the condensation catalyst is used to prepare a curable composition having both ultraviolet curability and moisture curability, there is the problem that the ultraviolet curability or moisture curability may decrease after storage.

Patent Document 1: JP S62-172010 A
Patent Document 2: JP 2660549 B
Patent Document 3: JP H05-311082 A
Patent Document 4: JP 2000-178535 A
Patent Document 5: JP 2005-187615 A
Patent Document 6: WO 2008/041768
Patent Document 7 : JP 2004-107396 A
Patent Document 8 : JP 2005-281495 A
Patent Document 9 : JP 2009-173709 A

### SUMMARY OF THE INVENTION

An object of the present invention is to provide a curable composition comprising: (I) a vinyl polymer having at least one crosslinkable silyl group on average, (II) a vinyl polymer having at least one ultraviolet-crosslinkable group on average, (III) an ultraviolet polymerization initiator, (IV) an organic acid, and (V) a ketimine compound, wherein the curable composition is able to be cured rapidly by ultraviolet light and then is free of uncured portions even at locations not exposed to ultraviolet light, and does not show a decrease in curability after storage.

Patent Document 7 discloses a curable composition at least comprises a vinyl polymer (a) having hydrolyzable silyl groups, an epoxy group-containing silane compound, and a ketimine compound.

Patent Document 8 discloses a curable composition comprising (A) a polymer having the acrylic main chain and the hydrolyzable silicon-containing group, (B) a polymer comprising at least one of (B1) a polymer bearing the hydrolyzable silicon-containing group where the number of carbon atoms at the terminal part of the main chain bonded to the silicon atom of the hydrolyzable silicon-containing group is one and (B2) a polymer obtained by reacting a prepolymer bearing a terminal isocyanate group with a compound bearing an amino or an imino group and a hydrolyzable silicon-containing group, and a tin catalyst and/or a titanium catalyst.

Patent Document 9 discloses a curable composition containing (A) a vinyl based polymer having at least one crosslinkable silyl group, (B) a photopolymerization initiator, and (C) a primary and/or a secondary amine having a melting point of 20 °C or higher.

As a result of conducting extensive studies to solve the above-mentioned problems, the inventors of the present invention have found that a curable composition comprising (I) a vinyl polymer having at least one crosslinkable silyl group on average, (II) a vinyl polymer having at least one ultraviolet-crosslinkable group on average, (III) an ultraviolet polymerization initiator, (IV) an organic acid, and (V) a ketimine compound, can be cured rapidly by ultraviolet light and then is free of uncured portions even at locations not exposed to ultraviolet light, and does not show a decrease in curability after storage, thereby leading to the completion of the present invention.

Specifically, the present invention relates to a curable composition, comprising: (I) a vinyl polymer having at least one crosslinkable silyl group on average, (II) a vinyl polymer having at least one ultraviolet-crosslinkable group on average, (III) an ultraviolet polymerization initiator, (IV) an organic acid, and (V) a ketimine compound.

The vinyl polymer (I) having at least one crosslinkable silyl group on average which is contained in the curable composition of the present invention (hereinafter sometimes abbreviated to simply "vinyl polymer (I)") is preferably that in which the crosslinkable silyl group is represented by general formula (1):

-[Si(R¹)_{2-b}(Y)_{b}O]ₘ-Si(R²)₃₋ₐ(Y)ₐ (1)

wherein R¹ and R² may be the same or different and each represent an alkyl group having 1 to 20 carbon atoms, an aryl group having 6 to 20 carbon atoms, an aralkyl group having 7 to 20 carbon atoms, or a triorganosiloxy group represented by (R')₃SiO- (wherein R' represents a monovalent hydrocarbon group having 1 to 20 carbon atoms, and the plurality of R's may be the same or different) , and when two or more R¹s or R²s are present, they may be the same or different, Y represents a hydroxyl group or a hydrolyzable group, and when two or more Ys are present, they may be the same or different, a represents 0, 1, 2 or 3, b represents 0, 1 or 2, and m represents an integer of 0 to 19, provided that the relation: a + mb ≥ 1 is satisfied.

The vinyl polymer (II) having at least one ultraviolet-crosslinkable group on average which is contained in the curable composition of the present invention (hereinafter sometimes abbreviated to simply "vinyl polymer (II)") is preferably that in which the ultraviolet-crosslinkable group is represented by general formula (2):

-OC (O) C (R³) =CH₂ (2)

wherein R³ represents a hydrogen atom or an organic group having 1 to 20 carbon atoms.

The main chains of the vinyl polymers (I) and (II) contained in the curable composition of the present invention are each preferably produced by polymerizing mainly a (meth)acrylate monomer, and more preferably produced by polymerizing mainly an acrylate monomer.

The main chains of the vinyl polymers (I) and (II) contained in the curable composition of the present invention are each preferably produced by living radical polymerization, and more preferably produced by atom transfer radical polymerization.

The crosslinkable silyl group of the vinyl polymer (I) and the ultraviolet-crosslinkable group of the vinyl polymer (II), both of which are contained in the curable composition of the present invention, are each preferably present at an end of a molecular chain thereof.

The organic acid (IV) contained in the curable composition of the present invention is preferably a fatty acid having 8 or more carbon atoms.

The ketimine compound (V) contained in the curable composition of the present invention is preferably a ketimine compound obtained by reacting an aminosilane and a ketone.

The curable composition of the present invention preferably comprises: 10 to 1000 parts by weight of the vinyl polymer (II) for each 100 parts by weight of the vinyl polymer (I); 0.01 to 10 parts by weight of the ultraviolet polymerization initiator (III) for each 100 parts by weight of the vinyl polymer (II) ; 0.1 to 10 parts by weight of the organic acid (IV) for each 100 parts by weight of the vinyl polymer (I) ; and 0.1 to 10 parts by weight of the ketimine compound (V) for each 100 parts by weight of the vinyl polymer (I).

The present invention also relates to a cured product obtained from the above-mentioned curable composition.

The curable composition of the present invention is characterized by providing a curable composition that can be cured rapidly by ultraviolet light and then is free of uncured portions even at locations not exposed to ultraviolet light, and does not show a decrease in curability after storage.

### MODES FOR CARRYING OUT THE INVENTION

The following provides a detailed description of the curable composition of the present invention. «Vinyl Polymer (I) having at least one crosslinkable silyl group on average and Vinyl Polymer (II) having at least one ultraviolet-crosslinkable group on average»

Although the main chains of the vinyl polymer (I) and the vinyl polymer (II) maybe the same or different, the structures of the main chains or the substituents of the side chains are preferably similar from the viewpoint of compatibility.

Since the same explanations can be used for both of the main chains, production methods and so forth of these polymers, these are collectively provided below.

### <Vinyl Polymer Main Chains>

**Concerning** the vinyl monomers that can form the main chains of the vinyl polymer (I) and the vinyl polymer (II), respectively, various types of vinyl monomers can be used.

Specific examples of the vinyl monomers include (meth)acrylate monomers such as (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, toluyl (meth)acrylate, benzyl (meth)acrylate, 2-methoxyethyl (meth)acrylate, 3-methoxypropyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl)trimethoxysilane, ethylene oxide adducts of (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylmethyl (meth)acrylate, 2-perfluorohexylethyl (meth)acrylate, 2-perfluorodecylethyl (meth)acrylate, and 2-perfluorohexadecylethyl (meth)acrylate; styrene monomers such as styrene, vinyltoluene, α-methylstyrene, chlorostyrene, and styrenesulfonic acid and salts thereof; fluorine-containing vinyl monomers such as perfluoroethylene, perfluoropropylene and vinylidene fluoride; silicon-containing vinyl monomers such as vinyltrimethoxysilane and vinyltriethoxysilane; maleic anhydride, maleic acid and monoalkyl esters and dialkyl esters of maleic acid; fumaric acid, monoalkyl esters and dialkyl esters of fumaric acid; maleimide monomers such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; nitrile group-containing vinyl monomers such as acrylonitrile and methacrylonitrile; amide group-containing vinyl monomers such as acrylamide and methacrylamide; vinyl esters such as vinyl acetate, vinyl propionate, vinyl pivalate, vinyl benzoate, and vinyl cinnamate; alkenes such as ethylene and propylene; and conjugated dienes such as butadiene and isoprene; as well as vinyl chloride, vinylidene chloride, allyl chloride, and allyl alcohol.

These may be used alone, or a plurality thereof may be copolymerized. Here, the (meth)acrylic acid (or (meth)acrylate) refers to acrylic acid (or acrylate) and/or methacrylic acid (or methacrylate).

The main chains of the vinyl polymer (I) and the vinyl polymer (II) used in the curable composition of the present invention are each preferably produced by polymerizing mainly a (meth)acrylate monomer, and more preferably produced by polymerizing mainly an acrylate monomer, from the viewpoint of superior physical properties (e.g., flexibility, viscosity, elongation) of the product at low temperatures. Here, the term "mainly" means that 50 mol% or more, and preferably 70 mol% or more, of the monomer units that form the vinyl polymer (I) or the vinyl polymer (II) is derived from a (meth) acrylate monomer.

Particularly preferred examples of acrylate monomers include alkyl acrylate monomers, specific examples of which include ethyl acrylate, 2-methoxyethyl acrylate, stearyl acrylate, butyl acrylate, 2-ethylhexyl acrylate, and 2-methoxybutyl acrylate.

In the present invention, such a preferred monomer may be copolymerized or even block copolymerized with another monomer.

**Concerning** the molecular weight distribution of the vinyl polymer (I) and the vinyl polymer (II) in the present invention, in other words, the ratio (Mw/Mn) of the weight average molecular weight (Mw) to the number average molecular weight (Mn) as measured by gel permeation chromatography (GPC), it is preferably less than 1.8, more preferably 1.7 or less, even more preferably 1.6 or less, still more preferably 1.5 or less, particularly preferably 1.4 or less, and most preferably 1.3 or less. If the molecular weight distribution is excessively large, the viscosity tends to increase with the same molecular weight between crosslinks, thereby making handling difficult. GPC measurement in the present invention can be carried out with a polystyrene gel column using chloroform as the mobile phase, and the number average molecular weight can be determined relative to polystyrene standards.

**Concerning** the number average molecular weight of the vinyl polymer (I) and the vinyl polymer (II) in the present invention, the number average molecular weight, in the case of measurement by GPC, is preferably in the range of 500 to 1,000,000, more preferably in the range of 1,000 to 100,000, even more preferably in the range of 5, 000 to 80, 000, and still more preferably in the range of 8, 000 to 50, 000. If the molecular weight is excessively low, handling becomes easy due to the low viscosity; however, the elongation of the resulting cured product is inadequate, or the resulting cured product is only that having inferior flexibility. On the other hand, if the molecular weight is excessively high, handling tends to be difficult.

### <Vinyl Polymer Synthesis Method>

Although the vinyl polymer (I) and the vinyl polymer (II) used in the present invention can be obtained according to various polymerization methods, radical polymerization methods are preferred from the viewpoints of versatility with respect to monomers, **and** ease of control. Among radical polymerization methods, controlled radical polymerization is more preferred. This controlled radical polymerization method can be classified into a "chain transfer agent method" and a "living radical polymerization method." Living radical polymerization, which allows easy control of the molecular weight and molecular weight distribution of the resulting vinyl polymer (I) and vinyl polymer (II), is more preferred, and atom transfer radical polymerization is particularly preferred in consideration of the availability of raw materials and ease of introducing a functional group into the polymer end. These radical polymerization, controlled radical polymerization, chain transfer agent method, living radical polymerization method and atom transfer radical polymerization are known polymerization methods, and the descriptions of, for example, JP 2005-232419 A or JP 2006-291073 can be referred to in relation to these polymerization methods.

The following provides a brief explanation of atom transfer radical polymerization, which is one of the preferred methods used to synthesize the vinyl polymer (I) and the vinyl polymer (II) in the present invention.

In atom transfer radical polymerization, an organic halide, particularly an organic halide having a highly reactive carbon-halogen bond (e.g. carbonyl compounds having a halogen at the α position, compounds having a halogen at the benzyl position), or a halogenated sulfonyl compound is preferably used as an initiator.

In order to obtain a vinyl polymer having two or more alkenyl groups that can undergo a hydrosilylation reaction, in a molecule thereof, an organic halide or a halogenated sulfonyl compound each having two or more initiation points is preferably used as an initiator.

**Concerning** the vinyl monomer to be used in atom transfer radical polymerization, all of the previously listed examples of vinyl monomers can be suitably used.

**Concerning** a transition metal complex to be used as a polymerization catalyst, preferred examples thereof include metal complexes having as a central metal an element belonging to group 7, group 8, group 9, group 10 or group 11 of the periodic table, more preferred examples include transition metal complexes having as a central metal zero-valent copper, monovalent copper, divalent ruthenium, divalent iron or divalent nickel, and particularly preferred examples include copper complexes. Specific examples of monovalent copper compounds that may be used to form the copper complex include cuprous chloride, cuprous bromide, cuprous iodide, cuprous cyanide, cuprous oxide and cuprous perchlorate. In the case of using a copper compound, 2,2'-bipyridyl or a derivative thereof, 1, 10-phenanthroline or a derivative thereof, or a polyamine such as tetramethylethylenediamine, pentamethyldiethylenetriamine, hexamethyltriethylenetetraamine or hexamethyl tris(2-aminoethyl)amine is added as a ligand to enhance the catalytic activity.

Although the polymerization reaction can be carried out in the absence of a solvent, it may also be carried out in various types of solvents. **Concerning** the type of solvent, mention may be made of the solvents described in paragraph [0067] of JP 2005-232419 A. These solvents may be used alone, or two or more types may be used in combination. In addition, polymerization may also be carried out in an emulsion system or a system in which supercritical fluid CO₂ is used as a medium.

**Concerning** the polymerization temperature, polymerization may be carried out in the range of 0°C to 200°C, and is preferably carried out in the range of room temperature to 150°C.

### <Crosslinkable Silyl Group>

The crosslinkable silyl group in the present invention may be a group represented by general formula (1):

-[Si(R¹)_{2-b}(Y)_{b}O]ₘ-Si(R²)₃₋ₐ(Y)ₐ (1)

wherein R¹ and R² each represent an alkyl group having 1 to 20 carbon atoms, an aryl group having 6 to 20 carbon atoms, an aralkyl group having 7 to 20 carbon atoms, or a triorganosiloxy group represented by (R')₃SiO- (wherein R' represents a monovalent hydrocarbon group having 1 to 20 carbon atoms, and the three R's may be the same or different), and when two or more R¹s or R²s are present, they may be the same or different, Y represents a hydroxyl group or a hydrolyzable group, and when two or more Ys are present, they may be the same or different, a represents 0, 1, 2 or 3, b represents 0, 1 or 2, and m represents an integer of 0 to 19, provided that the relation: a + mb ≥ 1 is satisfied.

Examples of the hydrolyzable group include commonly used groups such as a hydrogen atom, alkoxy group, acyloxy group, ketoximate group, amino group, amido group, aminooxy group, mercapto group and alkenyloxy group. Among these, an alkoxy group, amido group and aminooxy group are preferred, and from the viewpoint of ease of handling due to mild hydrolysis, an alkoxy group is particularly preferred. Among alkoxy groups, those having a smaller number of carbon atoms are more highly reactive, with the reactivity decreasing in the following order: a methoxy group > an ethoxy group > a propoxy group [...], and the hydrolyzable group can be selected according to the purpose or application.

A single silicon atom can be bonded to one to three groups selected from a hydrolyzable group and a hydroxyl group, and the (a + Σb) is preferably in the range of 1 to 5. In the case where two or more groups selected from a hydrolyzable group and a hydroxyl group are bonded in the crosslinkable silyl group, these groups may be the same or different. Although one or more silicon atoms can form the crosslinkable silyl group, the number of silicon atoms is preferably 20 or less in the case of silicon atoms linked by siloxane bonds. In particular, preferred is a crosslinkable silyl group represented by general formula (3):

-Si (R²)₃₋ₐ(Y)ₐ (3)

wherein R² and Y are as defined above, and a represents an integer of 1 to 3, from the viewpoint of easy availability.

Here, a is preferably, 2 or more since this results in favorable curability and favorable physical properties of the cured product.

A polymer having a hydrolyzable silicon group in which one silicon atom is bonded to two hydrolyzable groups is frequently used for the vinyl polymer (I) having the crosslinkable silyl group mentioned above; however, in cases requiring a particularly very rapid curing rate, such as uses at low temperatures, the curing rate of the polymer is not adequate, and if flexibility is also desired after curing, it is necessary to lower the crosslink density, as a result of which stickiness (surface tackiness) may occur due to the inadequate crosslink density. In this case, a group in which a is 3 (for example a trimethoxy functional group) is preferred.

In addition, although a group in which a is 3 (for example a trimethoxy functional group) results in more rapid curing than a group in which a is 2 (for example a dimethoxy functional group), there are some cases where a group in which a is 2 may be superior in terms of storage stability and mechanical properties (e.g. elongation). In order to obtain a favorable balance between curability and physical properties, a group in which a is 2 (for example a dimethoxy functional group) and a group in which a is 3 (for example a trimethoxy functional group) may be used in combination.

For example, in the case that Ys are the same, since the reactivity of Y increases with the larger number of a, the curability, and the mechanical properties of the cured product can be controlled by selecting from various combinations of Y and a, and such a selection can be made according to the purpose or application. A polymer in which a is 1 may be used in admixture with a polymer having a crosslinkable silyl group as a chain extender, more specifically, at least one polymer selected from those based on polysiloxane, polyoxypropylene or polyisobutylene. This enables the obtaining of a composition having, before curing, a low viscosity and also having, after curing, high elongation at break, low bleeding and low surface staining.

**Concerning** the number of crosslinkable silyl groups of the vinyl polymer (I) having a crosslinkable silyl group, the vinyl polymer (I) preferably has one or more, more preferably 1.1 or more but not more than 4.0, and even more preferably 1.2 or more but not more than 3.5, crosslinkable silyl groups on average in a molecule thereof, from the viewpoints of curability of the composition and physical properties of the cured product.

In cases where a cured product obtained by curing the curable composition of the present invention is required to have rubber-like properties in particular, at least one crosslinkable functional group is preferably at an end of the molecular chain in order to increase the molecular weight between crosslinks which has a considerable effect on rubber elasticity. More preferably, all crosslinkable functional groups are present at the molecular chain end.

Methods for producing a vinyl polymer, in particular, a (meth)acrylic polymer, having a crosslinkable silyl group at the molecular chain end as mentioned above are disclosed in, for example, JP H03-14068 B, JP H04-55444 B and JP H06-211922 A. However, since these methods are free radical polymerization methods using the above-mentioned "chain transfer agent method," the resulting polymers have crosslinkable silyl groups at the respective molecular chain ends at a comparatively high ratio, while the value of molecular weight distribution as represented by Mw/Mn is typically as large as 2 or more, thereby resulting in an increase in viscosity with the same molecular weight between crosslinks, which provides the problem of handling difficulty. Thus, the above-mentioned "living radical polymerization method" is preferred in the case of obtaining a vinyl polymer having a narrow molecular weight distribution and a low viscosity, and also having a crosslinkable silyl group at the molecular chain end at a high ratio, although it is not particularly limited to the case of a polymer having a narrow molecular weight distribution.

### <Crosslinkable Silyl Group Introduction Method>

A known method may be used to introduce a crosslinkable silyl group into the obtained vinyl polymer. For example, mention may be made of methods as described in paragraphs [0083] to [0117] of JP 2007-302749 A. Among these methods, a method is preferred in which a hydrosilane compound having a crosslinkable silyl group is addition-reacted with a vinyl polymer having at least one alkenyl group in the presence of a hydrosilylation catalyst because it is easier to control.

A known method may be used to introduce an alkenyl group that can undergo a hydrosilylation reaction, into the obtained vinyl polymer, and from the viewpoint of facilitating control of the alkenyl group introduction, a method is preferred in which a compound having at least two alkenyl groups having low polymerizability, for example, a diene compound such as 1,5-hexadiene, 1,7-octadiene or 1,9-decadiene, is reacted at the end of the polymerization reaction or after completion of the reaction of a predetermined amount of monomer in synthesis of a vinyl polymer by living radical polymerization. The following provides a brief explanation of a specific method.

Although the alkenyl group possessed by the diene compound may be either a terminal alkenyl group (CH₂=C(R)-R' wherein R represents a hydrogen atom or an organic group having 1 to 20 carbon atoms, R' represents a monovalent or divalent organic group having 1 to 20 carbon atoms, and R and R' may join together to have a ring structure) or an internal alkenyl group (R'-C(R)=C(R)-R' wherein R represents a hydrogen atom or an organic group having 1 to 20 carbon atoms, R' represents a monovalent or divalent organic group having 1 to 20 carbon atoms, the two Rs or the two R's may be the same or different, and any two of the two Rs and the two R's may join together to have a ring structure), the terminal alkenyl group is more preferred. R represents a hydrogen atom or an organic group having 1 to 20 carbon atoms, and the organic group having 1 to 20 carbon atoms is preferably an alkyl group having 1 to 20 carbon atoms, an aryl group having 6 to 20 carbon atoms, or an aralkyl group having 7 to 20 carbon atoms. Among these, R is particularly preferably a hydrogen atom or a methyl group. The monovalent or divalent organic group having 1 to 20 carbon atoms for R' is preferably a monovalent or divalent alkyl group having 1 to 20 carbon atoms, a monovalent or divalent aryl group having 6 to 20 carbon atoms, or a monovalent or divalent aralkyl group having 7 to 20 carbon atoms. Among these, R' is particularly preferably a methylene group, ethylene group or isopropylene group. The at least two alkenyl groups of the diene compound may be the same as or different from each other, and at least two alkenyl groups among alkenyl groups in the diene compound may be conjugated.

Specific examples of the diene compound include isoprene, piperylene, butadiene, myrcene, 1,5-hexadiene, 1,7-octadiene, 1,9-decadiene and 4-vinyl-1-cyclohexene, and preferred are 1,5-hexadiene, 1,7-octadiene and 1,9-decadiene.

Regarding the introduction of the diene compound, although a desired vinyl polymer having alkenyl groups at the end may be obtained by carrying out living radical polymerization of a vinyl monomer and isolating the resulting polymer from the polymerization system, followed by a radical reaction of the isolated polymer and the diene compound, a method is simpler and more preferred in which the diene compound is added to the polymerization reaction system at the end of the polymerization reaction or after completion of the reaction of a predetermined amount of a vinyl monomer.

The amount of the diene compound added may approximately be equivalent or in slight excess with respect to the growing end of the polymer in the case of using the diene compound in which the reactivities of two alkenyl groups are greatly different; and in the case of using the diene compound in which the reactivities of two alkenyl groups are equal or not much different, it is preferably in excess with respect to the growing end of the polymer, and more specifically, it is preferably 1.5 times or more, more preferably 3 times or more, and particularly preferably 5 times or more.

Meanwhile, **concerning** the hydrosilane compound having a crosslinkable silyl group, typical examples thereof include compounds represented by general formula (4):

H-[Si(R⁴)_{2-b}(Y)_{b}O]ₘ-Si(R⁵)₃₋ₐ(Y)ₐ (4)

wherein R⁴ and R⁵ each represent an alkyl group having 1 to 20 carbon atoms, an aryl group having 6 to 20 carbon atoms, an aralkyl group having 7 to 20 carbon atoms, or a triorganosiloxy group represented by (R')₃SiO- (wherein R' represents a monovalent hydrocarbon group having 1 to 20 carbon atoms, and the three R' may be the same or different), and when two or more R⁴s or R⁵s are present, they may be the same or different, Y represents a hydroxyl group or a hydrolyzable group, and when two or more Ys are present, they may be the same or different, a represents 0, 1, 2 or 3, b represents 0, 1 or 2, and m represents an integer of 0 to 19, provided that the relation: a + mb ≥ 1 is satisfied.

Among these hydrosilane compounds, in particular, compounds having a crosslinkable group and represented by general formula (5):

H-Si(R⁵)₃₋ₐ(Y)ₐ (5)

wherein R⁵ and Y are as defined above, and a represents an integer of 1 to 3, are preferred from the viewpoint of easy availability.

When the hydrosilane compound having a crosslinkable silyl group is added to the alkenyl group, a transition metal catalyst is usually used. Examples of the transition metal catalyst include elemental platinum, those in which a platinum solid is dispersed in a carrier such as alumina, silica or carbon black, chloroplatinic acids, complexes of a chloroplatinic acid with an alcohol, aldehyde, **or** ketone, platinum-olefin complexes, and platinum (0)-divinyltetramethyldisiloxane complexes. Examples of the catalysts other than platinum compounds include RhCl(PPh₃)₃, RhCl₃, RuCl₃, IrCl₃, FeCl₃, AlCl₃, PdCl₂·H₂O, NiCl₂ and TiCl₄.

### <Ultraviolet-Crosslinkable Group>

The following provides an explanation of the ultraviolet-crosslinkable group of the vinyl polymer (II).

As the ultraviolet-crosslinkable group, mention may be made of, for example, a (meth) acryloyl group and an epoxy group, and any of the functional groups may be used. For example, in the case of a vinyl polymer produced by the above-described atom transfer radical polymerization method, since a (meth)acryloyl group is then easy to introduce, the ultraviolet-crosslinkable group is preferably a group represented by general formula (2):

-OC(O)C(R³)=CH₂ (2)

wherein R³ represents a hydrogen atom or an organic group having 1 to 20 carbon atoms.

### <Ultraviolet-Crosslinkable Group Introduction Method>

A commonly known method may be used to introduce the ultraviolet-crosslinkable group. The following provides an explanation of an exemplary method for introducing a (meth)acryloyl group.

A known method can be used to introduce a (meth) acryloyl group. For example, mention may be made of methods as described in paragraphs [0080] to [0091] of JP 2004-203932 A. Among these methods, a method is preferred in which a terminal halogen group of a vinyl polymer is substituted with a compound having a (meth)acryloyl group to produce the desired product because it is easier to control.

A (meth)acrylic polymer having a terminal halogen group may be produced by a method in which a vinyl monomer is polymerized by using the previously described organic halide or halogenated sulfonyl compound as an initiator and a transition metal catalyst as a catalyst, or a method in which a vinyl monomer is polymerized by using a halogen compound as a chain transfer agent, and the former method is preferred.

**Concerning** the compound having a (meth) acryloyl group, a compound represented by the following general formula (6):

M⁺⁻OC(O)C(R)=CH₂ (6)

may be used, and specific examples of R in this formula (6) include -H, -CH₃, -CH₂CH₃, -(CH₂)ₙCH₃ (wherein n represents an integer of 2 to 19), -C₆H₅, -CH₂OH and -CN, with -H and -CH₃ being preferred.

M⁺ in formula (6) above is a counter cation for the oxyanion, and examples of the types of M⁺ include alkaline metal ions, specifically, a lithium ion, sodium ion and potassium ion, and quaternary ammonium ions. Examples of the quaternary ammonium ions include a tetramethylammonium ion, tetraethylammonium ion, tetrabenzylammonium ion, trimethyldodecylammonium ion, tetrabutylammonium ion, and dimethylpiperidinium ion. A sodium ion or potassium ion is preferred in terms of ease of reactivity and availability.

The amount of the oxyanion in general formula (6) used is preferably 1 equivalent to 5 equivalents and more preferably 1. 0 equivalent to 1.2 equivalents relative to the halogen group. Since this reaction proceeds nearly quantitatively, if the amount of the oxyanion used is excessively low, an adequate amount of the (meth) acryloyl group for the halogen group is not introduced; and conversely, if the amount is excessively high, it is economically undesirable.

**Concerning** the solvent in which this reaction is carried out, since the reaction is a nucleophilic substitution reaction, polar solvents are preferred, and examples thereof include tetrahydrofuran, dioxanes, diethyl ether, acetone, dimethylsulfoxide, dimethylformamide, dimethylacetamide, hexamethylphosphoric triamide and acetonitrile.

**Concerning** the temperature at which the reaction is carried out, the temperature is generally 0°C to 150°C, and the reaction is preferably carried out at room temperature to 100°C in order to keep the polymerizable terminal group.

### <Functional Group>

### Number of Crosslinkable Functional Groups

The numbers of crosslinkable functional groups of the vinyl polymers (I) and (II) may be the same as or different from each other. The vinyl polymers (I) and (II) each preferably have 1 or more, more preferably 1.1 or more but not more than 4.0, and even more preferably 1.2 or more but not more than 3.5, crosslinkable functional groups on average in a molecule thereof from the viewpoints of curability of the composition and physical properties of the cured product.

### Location of Crosslinkable Functional Group

In cases where a cured product obtained by curing the curable composition of the present invention is required to have rubber-like properties in particular, at least one crosslinkable functional group of the vinyl polymer (I) or (II) is preferably present at an end of a molecular chain thereof in order to increase the molecular weight between crosslinks which has a considerable effect on rubber elasticity. More preferably, all crosslinkable functional groups are present at the molecular chain end.

### <Compositional Ratio of Vinyl Polymers (I) and (II)>

Depending on the characteristics and curability of the resulting curable composition and the physical properties of the cured product, the compositional ratio of the vinyl polymer (I) having at least one crosslinkable silyl group on average and the vinyl polymer (II) having at least one ultraviolet-crosslinkable group on average in the present invention is usually such that the vinyl polymer (II) is preferably used, for each 100 parts by weight of the vinyl polymer (I), in the range of 10 to 1000 parts by weight, and more preferably in the range of 30 to 300 parts by weight from the viewpoints of the balance of curability between the vinyl polymer (I) and the vinyl polymer (II) and storage stability.

### <<Ultraviolet Polymerization Initiator (III)>>

**Concerning** the ultraviolet polymerization initiator (III) used in the curable composition of the present invention, examples include photoradical initiators and photoanion initiators. Examples of the photoradical initiators include acetophenone, propiophenone, benzophenone, xanthone, fluorenone, benzaldehyde, anthraquinone, triphenylamine, carbazole, 3-methylacetophenone, 4-methylacetophenone, 3-pentylacetophenone, 2,2-diethoxyacetophenone, 4-methoxyacetophenone, 3-bromoacetophenone, 4-allylacetophenone, p-diacetylbenzene, 3-methoxybenzophenone, 4-methylbenzophenone, 4-chlorobenzophenone, 4,4'-dimethoxybenzophenone, 4-chloro-4'-benzylbenzophenone, 3-chloroxanthone, 3,9-dichloroxanthone, 3-chloro-8-nonylxanthone, benzoin, benzoin methyl ether, benzoin isobutyl ether, bis(4-dimethylaminophenyl) ketone, benzyl methoxy ketal, 2-chlorothioxanthone, 2,2-dimethoxy-1,2-diphenylethan-1-one (trade name: Irgacure® 651, Ciba Japan K.K.), 1-hydroxy-cyclohexyl-phenyl-ketone (trade name: Irgacure® 184, Ciba Japan K.K.), 2-hydroxy-2-methyl-1-phenyl-propan-1-one (trade name: Darocur® 1173, Ciba Japan K.K.), 1-[4-(2-hydroxyethoxy)-phenyl]-2-hydroxy-2-methyl-1-propan-1-one (trade name: Irgacure® 2959, Ciba Japan K.K.), 2-methyl-1-[4-(methylthio)phenyl]-2-morpholinopropan-1-one (trade name: Irgacure® 907, Ciba Japan K.K.), 2-benzyl-2-dimethylamino-1-(4-morpholinophenyl)-butanone-1 (trade name: Irgacure® 369, Ciba Japan K.K.) and dibenzoyl.

Among these, preferred are α-hydroxyketone compounds (e.g., benzoin, benzoin methyl ether, benzoin butyl ether, 1-hydroxy- cyclohexyl-phenyl-ketone), and phenyl ketone derivatives (e.g., acetophenone, propiophenone, benzophenone, 3-methylacetophenone, 4-methylacetophenone, 3-pentylacetophenone, 2,2-diethoxyacetophenone, 4-methoxyacetophenone, 3-bromoacetophenone, 4-allylacetophenone, 3-methoxybenzophenone, 4-methylbenzophenone, 4-chlorobenzophenone, 4,4'-dimethoxybenzophenone, 4-chloro-4'-benzylbenzophenone, bis(4-dimethylaminophenyl) ketone).

Moreover, examples of initiator species capable of preventing oxygen inhibition of the surface of the product to be cured include those having two or more photodegradable groups in a molecule, such as 2-hydroxy-1-[4-[4-(2-hydroxy-2-methyl-propionyl)-benzyl]phenyl]-2-methyl-propan-1-one (trade name: Irgacure® 127, Ciba Japan K.K.), 1-[4-(4-benzoylphenylsulfanyl)phenyl]-2-methyl-2-(4-methylphenylsulfonyl)propan-1-one (trade name: Esacure® 1001M), methylbenzoylformate (trade name: Speedcure® MBF, Lambson Ltd.), O-ethoxyimino-1-phenylpropan-1-one (trade name: Speedcure® PDO, Lambson Ltd.) and oligo[2-hydroxy-2-methyl-[4-(1-methylvinyl)phenyl]propanone (trade name: Esacure® KIP150, Lamberti), and examples of hydrogen abstraction photoradical initiators having three or more aromatic rings in a molecule include 1,2-octanedione, 1-[4-(phenylthio)-, 2-(O-benzoyloxime); ethanone, 1-[9-ethyl-6-(2-methylbenzoyl)-9H-carbazol-3-yl]-1-(O-acetyloxime); 4-benzoyl-4'-methyldiphenylsulfide; 4-phenylbenzophenone; and 4,4',4" -(hexamethyltriamino) triphenylmethane. In addition, mention may also be made of acylphosphine oxide photoradical initiators characterized by the improvement of deep curability, such as 2,4,6-trimethylbenzoyl-diphenyl-phosphine oxide (trade name: Darocur® TPO, Ciba Japan K.K.), bis(2,4,6-trimethylbenzoyl)-phenylphosphine oxide (trade name: Irgacure® 819, Ciba Japan K.K.), bis(2,6-dimethylbenzoyl)-2,4,4-trimethyl-pentylphosphine oxide and 2,4,6-trimethylbenzoyl-diphenyl-phosphine oxide.

From the viewpoint of the balance between curability and storage stability of the curable composition of the present invention, more preferred examples of the photoradical initiators include 1-hydroxy-cyclohexyl-phenyl-ketone (trade name: Irgacure® 184, Ciba Japan K.K.), 2-hydroxy-2-methyl-1-phenyl-propan-1-one (trade name: Darocur® 1173, Ciba Japan K.K.), bis(4-dimethylaminophenyl) ketone, 2-hydroxy-1-[4-[4-(2-hydroxy-2-methyl-propionyl)-benzyl]phenyl]-2-methyl-propan-1-one (trade name: Irgacure® 127, Ciba Japan K.K.); 1,2-octanedione, 1-[4-(phenylthio)-, 2-(O-benzoyloxime) (trade name: Irgacure® OXE01, Ciba Japan K.K.); ethanone, 1-[9-ethyl-6-(2-methylbenzoyl)-9H-carbazol-3-yl]-1-(O-acetyloxime) (trade name: Irgacure® OXE02, Ciba Japan K.K.); 1-[4-(4-benzoylphenylsulfanyl)phenyl]-2-methyl-2-(4-methylphenylsulfonyl)propan-1-one (trade name: Esacure® 1001M), methylbenzoylformate (trade name: Speedcure® MBF, Lambson Ltd.), O-ethoxyimino-1-phenylpropan-1-one (trade name: Speedcure® PDO, Lambson Ltd.), oligo[2-hydroxy-2-methyl-[4-(1-methylvinyl)phenyl]propanone (trade name: Esacure® KIP150, Lamberti), 4-benzoyl-4'-methyldiphenylsulfide, 4-phenylbenzophenone, 4,4',4''-(hexamethyltriamino)triphenylmethane, 2,4,6-trimethylbenzoyl-diphenyl-phosphine oxide, bis(2,4,6-trimethylbenzoyl)-phenylphosphine oxide, bis(2,6-dimethylbenzoyl)-2,4,4-trimethyl-pentylphosphine oxide and 2,4,6-trimethylbenzoyl-diphenyl-phosphine oxide.

Examples of the photoanion initiators include 1,10-diaminodecane, 4,4'-trimethylenedipiperazine, carbamates and derivatives thereof, cobalt-amine complexes, aminooxyiminos and ammonium borates.

These ultraviolet polymerization initiators may be used alone, two or more types may be used in admixture, or they may be used in combination with other compounds.

Specific examples of combinations with other compounds include combinations with amines such as diethanolmethylamine, dimethylethanolamine, triethanolamine, ethyl-4-dimethylaminobenzoate and 2-ethylhexyl-4-dimethylaminobenzoate, and combinations with these amines plus iodonium salts such as diphenyliodonium chloride, and combinations with dyes such as methylene blue and amines.

Furthermore, in the case of using the above-mentioned photopolymerization initiators, a polymerization inhibitor such as hydroquinone, hydroquinone monomethyl ether, benzoquinone or para-tertiary-butylcatechol may be added as necessary.

**Concerning** the amount of the ultraviolet polymerization initiator added, the amount is, for each 100 parts by weight of the vinyl polymer (II), preferably 0.01 to 10 parts by weight from the viewpoints of curability and storage stability, and preferably 0.1 to 5 parts by weight since this results in favorable curability and favorable physical properties of the cured product.

In the case where the crosslinkable functional group of the vinyl polymer (II) is an epoxy group, a photo/ultraviolet-curing agent may be used for the ultraviolet polymerization initiator, and examples thereof include aromatic diazonium salts, diaryliodonium salts, triarylsulfonium salts, triarylselenium salts and antimony compounds.

### <<Organic Acid (IV)>>

**Concerning** the organic acid (IV) used in the curable composition of the present invention, various organic acids can be used. Specific examples include linear saturated fatty acids such as formic acid, acetic acid, propionic acid, butyric acid, valeric acid, caproic acid, enanthic acid, caprylic acid, pelargonic acid, capric acid, nonanoic acid, decanoic acid, undecanoic acid, lauric acid, tridecylic acid, myristic acid, pentadecylic acid, palmitic acid, palmitoyl acid, margaric acid, heptadecylic acid, stearic acid, nonadecanoic acid, arachic acid, behenic acid, lignoceric acid, cerotic acid, montanic acid, mellisic acid and lacceric acid; monoene unsaturated fatty acids such as undecylenic acid, linderic acid, tsuzuic acid, physeteric acid, myristoleic acid, 2-hexadecenoic acid, 6-hexadecenoic acid, 7-hexadecenoic acid, palmitoleic acid, petroselinic acid, oleic acid, elaidic acid, asclepinic acid, vaccenic acid, gadoleic acid, gondoic acid, setoleic acid, erucic acid, brassidic acid, selacholeic acid, ximenic acid, lumequeic acid, acrylic acid, methacrylic acid, angelic acid, crotonic acid, isocrotonic acid and 10-undecenoic acid; polyene unsaturated fatty acids such as linoelaidic acid, linoleic acid, 10,12-octadecadienoic acid, hiragonic acid, a-eleostearic acid, β-eleostearic acid, punicic acid, linolenic acid, 8,11,14-eicosatrienoic acid, 7,10,13-docosatrienoic acid, 4,8,11,14-hexadecatetraenoic acid, moroctic acid, stearidonic acid, arachidonic acid, 8,12,16,19-docosatetraenoic acid, 4,8,12,15,18-eicosapentaenoic acid, clupanodonic acid, nisinic acid and docosahexaenoic acid; branched fatty acids such as 2-methylbutyric acid, isobutyric acid, 2-ethylbutyric acid, pivalic acid, 2,2-dimethylbutyric acid, 2-ethyl-2-methylbutyric acid, 2,2-diethylbutyric acid, 2-phenylbutyric acid, isovaleric acid, 2,2-dimethylvaleric acid, 2-ethyl-2-methylvaleric acid, 2,2-diethylvaleric acid, 2-ethylhexanoic acid, isooctanoic acid, isononanoic acid, 2,2-dimethylhexanoic acid, 2,2-diethylhexanoic acid, 2,2-dimethyloctanoic acid, 2-ethyl-2,5-dimethylhexanoic acid, versatic acid, neodecanoic acid and tuberculostearic acid; fatty acids having a triple bond such as propiolic acid, tariric acid, stearolic acid, crepenynic acid, ximenynic acid and 7-hexadecynoic acid; alicyclic carboxylic acids such as naphthenic acid, malvalic acid, sterculic acid, hydnocarpic acid, chaulmoogric acid, gorlic acid, 1-methylcyclopentanecarboxylic acid, 1-methylcyclohexanecarboxylic acid, 1-adamantanecarboxylic acid, bicyclo[2.2.2]octane-1-carboxylic acid and bicyclo[2.2.1]heptane-1-carboxylic acid; oxygen-containing fatty acids such as acetoacetic acid, ethoxyacetic acid, glyoxylic acid, glycolic acid, gluconic acid, sabinic acid, 2-hydroxytetradecanoic acid, ipurolic acid, 2-hydroxyhexadecanoic acid, jalapinolic acid, juniperinic acid, ambrettolic acid, aleuritic acid, 2-hydroxyoctadecanoic acid, 12-hydroxyoctadecanoic acid, 18-hydroxyoctadecanoic acid, 9,10-dihydroxyoctadecanoic acid, 2,2-dimethyl-3-hydroxypropionic acid, ricinoleic acid, kamlolenic acid, licanic acid, phellonic acid and cerebronic acid; and halogen-substituted monocarboxylic acids such as chloroacetic acid, 2-chloroacrylic acid, chlorobenzoic acid and trifluoroacetic acid. Examples of aliphatic dicarboxylic acids include linear dicarboxylic acids such as adipic acid, azelaic acid, pimelic acid, suberic acid, sebacic acid, glutaric acid, oxalic acid, malonic acid, ethylmalonic acid, dimethylmalonic acid, ethylmethylmalonic acid, diethylmalonic acid, succinic acid, 2,2-dimethylsuccinic acid, 2,2-diethylsuccinic acid and 2,2-dimethylglutaric acid; saturated dicarboxylic acids such as 1,2,2-trimethyl-1,3-cyclopentanedicarboxylic acid and oxydiacetic acid; and unsaturated dicarboxylic acids such as maleic acid, fumaric acid, acetylenedicarboxylic acid and itaconic acid. Examples of aliphatic polycarboxylic acids include linear tricarboxylic acids such as aconitic acid, citric acid, isocitric acid, 3-methylisocitric acid and 4,4-dimethylaconitic acid. Examples of aromatic carboxylic acids include aromatic monocarboxylic acids such as benzoic acid, 9-anthracenecarboxylic acid, atrolactic acid, anisic acid, isopropylbenzoic acid, salicylic acid and toluic acid; and aromatic polycarboxylic acids such as phthalic acid, isophthalic acid, terephthalic acid, carboxyphenylacetic acid and pyromellitic acid. Other examples include amino acids such as alanine, leucine, threonine, aspartic acid, glutamic acid, arginine, cysteine, methionine, phenylalanine, tryptophan and histidine. In addition, carboxylic acid anhydrides such as isobutyric anhydride, itaconic anhydride, acetic anhydride, citraconic anhydride, propionic anhydride, maleic anhydride, butyric anhydride, citric anhydride, trimellitic anhydride, pyromellitic anhydride and phthalic anhydride, and carboxylic acid derivatives that form a carboxylic acid by hydrolysis, such as esters, amides, nitriles and acyl chlorides, may also be used. In particular, 2-ethylhexanoic acid, octylic acid, 2,2-dimethyloctanoic acid, 2-ethyl-2, 5-dimethylhexanoic acid, versatic acid, neodecanoic acid, oleic acid, **and** naphthenic acid are preferred because they are readily available, inexpensive and have favorable compatibility with the vinyl polymers (I) and (II); fatty acids having 8 or more carbon atoms, such as 2-ethylhexanoic acid, octylic acid, 2,2-dimethyloctanoic acid, 2-ethyl-2,5-dimethylhexanoic acid, versatic acid and neodecanoic acid, are more preferred since they have favorable activity; and 2-ethylhexanoic acid, versatic acid and neodecanoic acid are particularly preferred because they are readily available.

One type of the organic acid (IV) may be used alone, or two or more types may be used in admixture. **Concerning** the amount of the organic acid (IV) added, the amount is, for each 100 parts by weight of the vinyl polymer (I), preferably 0.1 to 10 parts by weight from the viewpoints of curability and storage stability, and preferably 0.5 to 6 parts by weight since this results in favorable curability and storage stability and also favorable physical properties of the cured product.

### <<Ketimine Compound (V)>>

**Various types of** ketimine compound (V) **can be** used in the curable composition of the present invention. The ketimine compound (V) may be obtained by a condensation reaction between a known amine compound and a known carbonyl compound. Such a ketimine compound is stable in the absence of moisture, but is decomposed into a primary amine and a ketone by moisture and the resulting primary amine has the effect of promoting a hydrolytic condensation reaction of crosslinkable silyl groups due to its synergistic effect with the organic acid catalyst. As the ketimine compound (V), mention may be made of ketimines as listed in JP H07-242737 A, for example. Examples of amine compounds that can be used include diamines such as ethylenediamine, propylenediamine, trimethylenediamine, tetramethylenediamine, 1,3-diaminobutane, 2,3-diaminobutane, pentamethylenediamine, 2,4-diaminopentane, hexamethylenediamine, p-phenylenediamine and p,p'-biphenylenediamine; polyvalent amines such as 1,2,3-triaminopropane, triaminobenzene, tris(2-aminoethyl)amine and tetra(aminomethyl)methane; polyalkylene polyamines such as diethylenetriamine, triethylenetriamine and tetraethylenepentamine; polyoxyalkylene polyamines; and aminosilanes such as γ-aminopropyltriethoxysilane, γ-aminopropyltrimethoxysilane, γ-aminopropylmethyldimethoxysilane, γ-aminopropylmethyldiethoxysilane, N-(β-aminoethyl)-γ-aminopropyltrimethoxysilane, N-(β-aminoethyl)-γ-aminopropyltriethoxysilane and N-(β-aminoethyl)-γ-aminopropylmethyldimethoxysilane. Examples of carbonyl compounds that can be used include aldehydes such as acetoaldehyde, propionaldehyde, n-butylaldehyde, isobutylaldehyde, diethylacetoaldehyde, glyoxal and benzaldehyde; cyclic ketones such as cyclopentanone, trimethylcyclopentanone, cyclohexanone and trimethylcyclohexanone; aliphatic ketones such as acetone, methyl ethyl ketone, methyl propyl ketone, methyl isopropyl ketone, methyl isobutyl ketone, diethyl ketone, dipropyl ketone, diisopropyl ketone, dibutyl ketone and diisobutyl ketone; and β-dicarbonyl compounds such as acetylacetone, methyl acetoacetate, ethyl acetoacetate, dimethyl malonate, diethyl malonate, methyl ethyl malonate and dibenzoylmethane.

In the case where an imino group is present in the ketimine, the imino group may be reacted with styrene oxide; a glycidyl ether such as butyl glycidyl ether or allyl glycidyl ether; or a glycidyl ester.

Among these ketimine compounds, ketimine compounds obtained by a reaction between an aminosilane and a ketone are preferred from the viewpoint of curability, and specific examples thereof include ketimine compounds obtained by a reaction between an aminosilane (γ-aminopropyltriethoxysilane, γ-aminopropyltrimethoxysilane, γ-aminopropylmethyldimethoxysilane or γ-aminopropylmethyldiethoxysilane) and a ketone (e.g., methyl ethyl ketone, methyl propyl ketone, methyl isopropyl ketone, methyl isobutyl ketone). N-(1,3-dimethylbutylidene)-3-(triethoxysilyl)-1-propaneamine (Sila-Ace® S340, Chisso Corp.), which is obtained by a reaction between γ-aminopropyltriethoxysilane and methyl isobutyl ketone, is more preferred from the viewpoint of easy availability. These ketimine compounds may be used alone, or two or more types may be used in combination. **Concerning** the amount of the ketimine compound added, the amount is preferably in the range of 0.1 to 10 parts by weight, and more preferably in the range of 0.5 to 6 parts by weight, for each 100 parts by weight of the vinyl polymer (I) from the viewpoints of curability and storage stability.

### «Curable Composition»

In the curable composition of the present invention, various types of additives may be added according to the desired physical properties.

### <Reactive Diluent>

In the curable composition of the present invention, for example, a monomer and/or oligomer having a radical-polymerizable group may also be used in order to enhance workability by decreasing the viscosity, or to improve the physical properties of the cured product, for example.

Examples of the radical-polymerizable group include a (meth)acryloyl group such as a (meth)acrylic group, styrene group, acrylonitrile group, vinylester group, N-vinylpyrrolidone group, acrylamide group, conjugated diene group, vinylketone group and vinylchloride group. In particular, compounds having a (meth)acryloyl group similar to the ultraviolet-crosslinkable group used in the vinyl polymer (II) in the present invention are preferred.

Specific examples of the monomer include (meth) acrylate monomers, styrene monomers, acrylonitrile, vinyl ester monomers, N-vinylpyrrolidone, acrylamide monomers, conjugated diene monomers, vinyl ketone monomers, vinyl halide/vinylidene halide monomers and polyfunctional monomers.

Examples of the (meth)acrylate monomers include methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, isooctyl (meth)acrylate, 2-ethylhexyl (meth)acrylate, nonyl (meth)acrylate, isononyl (meth)acrylate, decyl (meth)acrylate, isodecyl (meth)acrylate, dodecyl (meth)acrylate, lauryl (meth)acrylate, stearyl (meth)acrylate, tridecyl (meth)acrylate, phenyl (meth)acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl)trimethoxysilane, ethylene oxide adducts of (meth)acrylic acid, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylethyl (meth)acrylate, 2-perfluorohexylethyl (meth)acrylate, 2-perfluorodecylethyl (meth)acrylate and 2-perfluorohexadecylethyl (meth)acrylate.

Examples of the styrene monomers include styrene and α-methylstyrene.

Examples of the vinyl ester monomers include vinyl acetate, vinyl propionate and vinyl butyrate.

Examples of the acrylamide monomers include acrylamide and N,N-dimethylacrylamide.

Examples of the conjugated diene monomers include butadiene and isoprene. Examples of the vinyl ketone monomers include methyl vinyl ketone.

Examples of the vinyl halide/vinylidene halide monomers include vinyl chloride, vinyl bromide, vinyl iodide, vinylidene chloride and vinylidene bromide.

Examples of the polyfunctional monomers include trimethylolpropane triacrylate, neopentyl glycol polypropoxy diacrylate, neopentyl glycol diacrylate, trimethylolpropane polyethoxy triacrylate, bisphenol F polyethoxy diacrylate, bisphenol A polyethoxy diacrylate, dipentaerythritol polyhexanolide hexaacrylate, tris(hydroxyethyl)isocyanurate polyhexanolide triacrylate, tricyclodecane dimethylol diacrylate, 2-(2-acryloyloxy-1,1-dimethyl)-5-ethyl-5-acryloyloxymethyl-1,3-dioxane, tetrabromobisphenol A diethoxy diacrylate, 4,4-dimercaptodiphenyl sulfide dimethacrylate, poly(tetraethylene glycol) diacrylate, 1,9-nonanediol diacrylate, 1,6-hexane diacrylate, dimethylol tricyclodecane diacrylate and di(trimethylolpropane) tetraacrylate.

Examples of the oligomer include epoxy acrylate resins such as bisphenol A-type epoxy acrylate resin, phenol novolac-type epoxy acrylate resin, cresol novolac-type epoxy acrylate resin and COOH group-modified epoxy acrylate resin; urethane acrylate resins obtained by reacting an urethane resin produced from a polyol (e.g., polytetramethylene glycol, polyester diol of ethylene glycol and adipic acid, ε-caprolactone-modified polyester diol, polypropylene glycol, polyethylene glycol, polycarbonate diol, hydroxyl group-terminated hydrogenated polyisoprene, hydroxyl group-terminated polybutadiene , hydroxyl group-terminated polyisobutylene) and an organic isocyanate (e.g., tolylene diisocyanate, isophorone diisocyanate, diphenylmethane diisocyanate, hexamethylene diisocyanate, xylylene diisocyanate), with a hydroxyl group-containing (meth)acrylate (e.g., hydroxyethyl (meth)acrylate, hydroxypropyl (meth)acrylate, hydroxybutyl (meth)acrylate, pentaerythritol triacrylate); resins obtained by introducing a (meth)acrylic group into the above-mentioned polyol via an ester bond; and polyester acrylate resins and poly (meth) acrylic acrylate resins (poly(meth)acrylic ester resins having a polymerizable reactive group).

Among these, oligomers having two or more radical-polymerizable groups are preferred from the viewpoints of enhancing the gel fraction of the resulting cured product and reducing the flowing out of uncured components.

In addition, the number average molecular weight of the monomer and/or oligomer having a (meth)acryloyl group is preferably 5000 or less. The molecular weight is more preferably 1000 or less from the viewpoints of favorable compatibility and superior viscosity reducing effect.

The amount of the polymerizable monomer and/or oligomer used is preferably 1 to 200 parts by weight, and more preferably 5 to 100 parts by weight, based on a total of 100 parts by weight of the vinyl polymer (I) and the vinyl polymer (II) from the viewpoints of improving mechanical properties and improving workability by decreasing the viscosity.

### <Polyether Polymer>

In the present invention, a polyether polymer having at least one crosslinkable silyl group on average may be used in order to enhance workability by reducing the viscosity, or to improve the physical properties of the cured product, for example. Specific examples thereof include polyether polymers containing a crosslinkable silyl group as the crosslinkable functional group among the polyether polymers described in paragraphs [0139] to [0158] of JP 2007-308716 A and paragraphs [0136] to [0149] of JP 2007-308692 A.

**Concerning** the main chain of the polyether polymer, examples include polyethylene oxide, polypropylene oxide, polybutylene oxide and polyphenylene oxide. Among these, it is preferable for the main chain to essentially consist of a polyoxyalkylene, and more preferably to essentially consist of polypropylene oxide, and then the main chain may also contain ethylene oxide, butylene oxide, **or** phenylene oxide in addition to propylene oxide. Here, "the main chain essentially consists of polypropylene oxide" means that propylene oxide units account for 50% or more, preferably 70% or more, and more preferably 90% or more of the repeating units that form the main chain. Since a lower viscosity results in greater ease of handling, polypropylene oxide-based polymers having a molecular weight distribution (Mw/Mn) of 1.5 or less are more preferred.

Crosslinkable silyl groups as mentioned previously can be used as the crosslinkable silyl group.

Commercially available products may be used for the polyether polymer having a crosslinkable silyl group, and examples thereof include MS Polymer S203, MS Polymer S303, MS Polymer S810, MS Polymer S943, Silyl SAT200, Silyl SAT350, Silyl SAX220, Silyl SAT400, Silyl EST280, Silyl MA440, and Silyl MA903 (all of which are manufactured by Kaneka Corp.), Excestar ES-S3620, ES-S3430, ES-S2420 and ES-S2410 (all of which are manufactured by Asahi Glass Co., Ltd.). These polyether polymers may be used alone, or two or more types may be used in combination.

Although the amount of the polyether polymer having a crosslinkable silyl group, if used, may be any amount, it is preferably present in a weight ratio relative to the vinyl polymer (I) having at least one crosslinkable silyl group of in the range of 100/1 to 1/100, more preferably in the range of 100/5 to 5/100, and even more preferably in the range of 100/10 to 10/100, and this mixing ratio may be set according to the particular application or purpose. If the amount of the polyether polymer added is excessively large, superior heat resistance or weather resistance, which is one of the characteristics of the cured product to be expected, may be impaired.

### <Dehydrating Agent>

During storage, a curable composition may increase in viscosity so that gelation proceeds, due to moisture that may be undesirably mixed in the preparation, which may result in poor workability during use. In addition, if such a curable composition whose viscosity has increased so that gelation has proceeded is used, there may be the problem of a decrease in the physical properties of the cured product after curing. In other words, the curable composition may have a problem with its storage stability.

In order to solve these problems, azeotropic dehydration or the addition of a dehydrating agent may be carried out as described in paragraphs [0237] to [0240] of JP 2008-274119 A. Examples of the dehydrating agent include hydrolyzable ester compounds such as trialkyl orthoformates such as trimethyl orthoformate, triethyl orthoformate, tripropyl orthoformate and tributyl orthoformate, and trialkyl orthoacetates such as trimethyl orthoacetate, triethyl orthoacetate, tripropyl orthoacetate and tributyl orthoacetate; and hydrolyzable organic silicon compounds represented by the formula: R⁶₄₋ₙSiYₙ (wherein Y represents a hydrolyzable group, R⁶ represents an organic group that may or may not contain a functional group, and n represents an integer of 1 to 4, and preferably 3 or 4), specific examples of which include silane compounds and partially hydrolyzed condensates thereof, such as vinyltrimethoxysilane, vinyltriethoxysilane, methyltrimethoxysilane, methyltriethoxysilane, ethyltriethoxysilane, phenyltriethoxysilane, methyltriacetoxysilane, tetramethyl orthosilicate (tetramethoxysilane or methyl silicate), tetraethyl orthosilicate (tetraethoxysilane or ethyl silicate), tetrapropyl orthosilicate and tetrabutyl orthosilicate; and silane coupling agents and partially hydrolyzed condensates thereof, such as γ-glycidoxypropyltriethoxysilane, γ-acryloxypropyltrimethoxysilane, γ-methacryloxypropyltrimethoxysilane, γ-glycidoxypropyltrimethoxysilane and γ-mercaptopropyltrimethoxysilane. One type of these may be used alone, or two or more types may be used in combination.

Since such a dehydrating agent not only prevents the vinyl polymer from hydrolysis that leads to the formation of a three-dimensional network by a silanol condensation reaction during storage, but also prevents the decomposition of the ketimine by water, it is more preferred as a storage stability improver.

The amount of the storage stability improver used is preferably in the range of 0.1 to 30 parts by weight, and more preferably in the range of 0.5 to 10 parts by weight, based on a total of 100 parts by weight of the vinyl polymer (I) and the vinyl polymer (II).

Furthermore, when such a storage stability improver is added, the addition is preferably carried out after rendering the curable composition anhydrous, although the improver may also be added to the curable composition that still contains water.

### <Adhesion-Imparting Agent>

An adhesion-imparting agent may be used in the curable composition of the present invention. Silane coupling agents are typically used as adhesion-imparting agents, and other substances such as phenol resin, sulfur, alkyl titanates and aromatic polyisocyanates may also be used. One type of these may be used alone, or two or more types may be used in combination.

A wide range of conventionally known silane coupling agents can be used. Specific examples of the silane coupling agent include silane coupling agents having a functional group such as a mercapto group, epoxy group, carboxyl group, vinyl group, isocyanate group, isocyanurate group or halogen, more specific examples of which include isocyanate group-containing silanes such as γ-isocyanatopropyltrimethoxysilane, γ-isocyanatopropyltriethoxysilane, γ-isocyanatopropylmethyldiethoxysilane and γ-isocyanatopropylmethyldimethoxysilane; mercapto-group containing silanes such as γ-mercaptopropyltrimethoxysilane, γ-mercaptopropyltriethoxysilane, γ-mercaptopropylmethyldimethoxysilane and γ-mercaptopropylmethyldiethoxysilane; epoxy group-containing silanes such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane and β-(3,4-epoxycyclohexyl)ethyltriethoxysilane; carboxysilanes such as β-carboxyethyltriethoxysilane, β-carboxyethylphenylbis(2-methoxyethoxy)silane and N-β-(carboxymethyl)aminoethyl-γ-aminopropyltrimethoxysilane ; vinyl-type unsaturated group-containing silanes such as vinyltrimethoxysilane, vinyltriethoxysilane, γ-methacryloyloxypropylmethyldimethoxysilane and γ-acryloyloxypropylmethyltriethoxysilane; halogen-containing silanes such as γ-chloropropyltrimethoxysilane; isocyanurate silanes such as tris(trimethoxysilyl)isocyanurate; and polysulfanes such as bis(3-triethoxysilylpropyl)tetrasulfane. In addition, reaction products of an amino group-containing silane and an epoxy group-containing silane, reaction products of an amino group-containing silane and an acryloyloxy group-containing silane, and reaction products of an amino group-containing silane and an isocyanate group-containing silane may also be used. These may be used alone, or two or more types may be used in combination.

Among these silane coupling agents, epoxysilanes and vinylsilanes are preferred from the viewpoints of superior storage stability of the resulting cured product and superior adhesion to an adherend, andy-glycidoxypropyltriethoxysilane, γ-glycidoxypropylmethyldiethoxysilane and vinyltrimethoxysilane are particularly preferred from the viewpoint of easy availability.

In the case of using a silane coupling agent as the adhesion-imparting agent, in general, the amount thereof is preferably in the range of 0.1 to 20 parts, and more preferably in the range of 0.5 to 10 parts, based on a total of 100 parts of the vinyl polymer (I) and the vinyl polymer (II). If the amount of the silane coupling agent is excessively small, adhesion to various adherends may become inferior or the strength of the resulting cured product may be decreased; and conversely, if the amount is excessively large, it may then result in economic inefficiency and poor curability.

### <Filler>

A filler may be added in the composition of the present invention to the extent that does not impair the effects of ultraviolet light. Specific examples of the filler include various fillers and hollow microparticles described in paragraphs [0134] to [0151] of JP 2006-291073 A. In addition, examples of the filler include finely powdered silica as reinforcing silica such as fumed silica and wet silica, wood flour, pulp, cotton chips, mica, walnut shell flour, chaff powder, graphite, white clay, silica (e.g., crystalline silica, molten silica, dolomite, anhydrous silicic acid, hydrous silicic acid), carbon black, heavy calcium carbonate, colloidal calcium carbonate, magnesium carbonate, diatomaceous earth, baked clay, clay, talc, titanium oxide, bentonite, organic bentonite, ferric oxide, red iron oxide, fine aluminum powder, flint powder, zinc oxide, active zinc oxide, powdered zinc, zinc carbonate, Shirasu balloons, and fibrous fillers such as glass fiber, glass filament, carbon fiber, Kevlar fiber and polyethylene fiber.

Fumed silica and wet silica are preferred from the viewpoints of superior transparency and reinforcement.

These fillers may be used alone, or two or more types may be used in combination.

### <Plasticizer>

A plasticizer may be added in the composition of the present invention. The addition of a plasticizer makes it possible to adjust the viscosity of the curable composition and the mechanical properties such as tensile strength or elongation of the resulting cured product, and to improve the transparency of the cured product. The type of the plasticizer depends on the purpose such as adjustment of physical properties or modification of characteristics, and examples include phthalic acid esters such as dibutyl phthalate, diheptyl phthalate, di(2-ethylhexyl) phthalate and butyl benzyl phthalate; non-aromatic dibasic acid esters such as dioctyl adipate, dioctyl sebacate, dibutyl sebacate and isodecyl succinate; aliphatic esters such as butyl oleate and methyl acetyl ricinoleate; esters of polyalkylene glycols such as diethylene glycol dibenzoate, triethylene glycol dibenzoate and pentaerythritol esters; phosphoric acid esters such as tricresyl phosphate and tributyl phosphate; trimellitic acid esters; pyromellitic acid esters; polystyrenes such as polystyrene and poly-α-methylstyrene; polybutadiene, polybutene, polyisobutylene, butadiene-acrylonitrile and polychloroprene; chlorinated paraffins; hydrocarbon oils such as alkyldiphenyls and partially hydrogenated terphenyls; process oils; polyethers such as polyether polyols such as polyethylene glycol, polypropylene glycol and polytetramethylene glycol, and derivatives obtained by converting a hydroxyl group of these polyether polyols to an ester group **or** ether group; epoxy plasticizers such as epoxidized soybean oil and benzyl epoxystearate; polyester plasticizers obtained from a dibasic acid such as sebacic acid, adipic acid, azelaic acid or phthalic acid and a divalent alcohol such as ethylene glycol, diethylene glycol, triethylene glycol, propylene glycol or dipropylene glycol; and vinyl polymers obtained by various methods to polymerize a vinyl monomer, including acrylic plasticizers such as Arufon series manufactured by Toagosei Co., Ltd. These plasticizers may be used alone, or two or more types may be used in combination.

### <Solvent>

A solvent may be incorporated in the curable composition used in the present invention, as necessary.

Examples of solvents that can be incorporated include aromatic hydrocarbon solvents such as toluene and xylene; ester solvents such as ethyl acetate, butyl acetate, amyl acetate and Cellosolve acetate; ketone solvents such as acetone, methyl ethyl ketone, methyl isobutyl ketone and diisobutyl ketone; alcohol solvents such as methanol, ethanol and isopropanol; and hydrocarbon solvents such as hexane, cyclohexane, methylcyclohexane, heptane and octane. These solvents may be used alone, or two or more types may be used in combination.

These solvents may be used in the production of the polymer or when components are mixed.

### <Thixotropy-Imparting Agent (Anti-sagging Agent)>

In the curable composition of the present invention, a thixotropy-imparting agent (anti-sagging agent) may be added for the purpose of preventing sagging to improve workability, as necessary.

### <Antioxidant>

An antioxidant (age resister) may be used in the composition of the present invention. The use of an antioxidant makes it possible to enhance heat resistance of the cured product. Examples of the antioxidant include primary antioxidants such as typical hindered phenol antioxidants, amine antioxidants and lactone antioxidants, as well as secondary antioxidants such as sulfur antioxidants and phosphorus antioxidants. Antioxidants described in paragraphs [0232] to [0235] of JP 2007-308692 A and paragraphs [0089] to [0093] of WO 05/116134 may be used as the antioxidant.

### <Other Additives>

In the curable composition of the present invention, various additives may be added as necessary for the purpose of adjusting various properties of the curable composition or cured product. Examples of such additives include compatibilizers, cure modifiers, radical inhibitors, metal deactivators, antiozonants, phosphorus-based peroxide decomposers, lubricants, pigments, antifoaming agents, foaming agents, ant repellents, fungicides, ultraviolet absorbers and photostabilizers. Other examples include compounds that form silicon compounds that are derivatives of an oxypropylene polymer and can form R₃SiOH such as trimethylsilanol by hydrolysis, as described in JP H07-258534 A. Moreover, polymers may also be used that have a crosslinkable, hydrolyzable silicon-containing group and a silicon-containing group that can form a monosilanol-containing compound by hydrolysis, as described in JP H06-279693 A. In addition, tetraalkoxysilanes or silicates that are partially hydrolyzed condensation products thereof may also be used. Each of these various additives may be used alone, or two or more types may be used in combination. Specific examples of additives other than the specific examples of additives listed in the present specification are described in, for example, publications such as JP H04-69659 B, JP H07-108928 B, JP S63-254149 A, JP S64-22904 A and JP 2001-72854 A.

### <Preparation of Curable Composition>

The curable composition of the present invention can be prepared as a one-pack type formulation in which all components have been mixed and sealed for storage in advance and which can be cured by irradiation with ultraviolet light or by moisture in air after application.

In the case of a one-pack type curable composition, the bother associated with mixing and kneading during application is eliminated, and at the same time, since measuring errors (incorrect mixing ratio) that may occur at that time can also be eliminated, errors such as defective curing can be prevented.

The curable composition of the present invention can also be prepared as a two-pack type curable composition in which components have been divided into any two parts that are to be mixed prior to use. Various combinations can be used for division into the part A and part B, in consideration of the mixing ratio, storage stability, mixing method, **and** pot life of the curable composition.

In addition, the curable composition can also be prepared as a three-pack type curable composition by preparing a third component in addition to the part A and part B, as necessary, or can be prepared in a larger number of divided parts as necessary.

**Concerning** the production method of the curable composition of the present invention, an ordinary method may be employed, such as incorporating the above-mentioned components, and then mixing them with a hand mixer or static mixer, or kneading them with a planetary mixer, disperser, roller, **or** kneader at room temperature or under heating, or dissolving the components by using a small amount of a suitable solvent followed by mixing.

### «Applications»

The curable composition of the present invention can be suitably used in electrical and electronic component materials such as conformal coating materials for printed circuit boards, solar cell back sealants, potting materials, sealing materials and adhesives, as well as being used in various applications such as industrial sealants, resist applications such as permanent resist applications, solder resist applications, dry film resist applications and electrodeposition resist applications, electrical insulating materials such as insulating coatings for electrical wires and cables, pressure sensitive adhesives, elastic adhesives, contact adhesives, tile adhesives, reactive hot-melt adhesives, paints, powdered paints, coating materials, and sealing materials for foamed articles, **or** can lids, thermal conductive sheets, films, gaskets, marine deck caulkings, casting materials, various types of molding materials, imitation marble, rust-preventive and waterproofing sealants for wired glass or laminated glass edges (cut portions), vibration-proofing, damping, soundproofing and base-isolating materials used in automobiles, ships, **or** home appliances , liquid sealants and waterproofing agents used in automotive components, electrical machinery components, **or** various types of machine components.

Moreover, in the automotive field, the curable composition of the present invention can be used, for body parts, in sealing materials for airtight sealing, vibration proofing materials for glass, and vibration-proofing materials for body sites, and in particular, windshield gaskets and door glass gaskets. It can be used, as chassis parts, in engine and suspension rubber materials for preventing vibrations and noise, and in particular, rubber engine mounts. It can be used, for engine parts, in hoses for cooling, fuel supply, **or** exhaust control, engine cover and oil pan gaskets, **and** sealing materials for engine oil. In addition, the curable composition of the present invention can also be used for exhaust gas cleaning system parts and brake parts. In the field of home appliances, the curable composition of the present invention can be used in packings, O-rings, **and** belts. Specific examples include ornaments, waterproof packings, anti-vibration rubber materials and insect-proof packings for lighting fixture, vibration-proofing, sound-absorbing and air sealing materials for vacuum cleaners, drip-proof covers, waterproof packings, heater packings, electrode packings and safety valve diaphragms for electric water heaters, hoses, waterproof packings and solenoid valves for sake warming machines, waterproof packings, water tank packings, feed water valves, water receiver packings, connection hoses, belts, warming heater packings, **and** steam discharge port seals for steam microwave ovens and rice cookers, oil packings, O-rings, drain packings, pressure tubes, blast tubes, air supply-intake packings, vibration-proofing rubber materials, fuel port packings, fuel gauge packings, fuel transfer tubes, diaphragm valves, **and** air pipes for combustion devices, and speaker gaskets, speaker edges, turntable sheets, belts and pulleys for audio equipment. In the field of construction, the curable composition of the present invention can be used in structural gaskets (zipper gaskets), materials for pneumatic structure roofs, waterproof materials, formed sealing materials, vibration-proofing materials, soundproofing materials, setting blocks, **and** sliding materials. In the field of sports, the curable composition of the present invention can be used in all-weather type paving materials, gym floors for sports floors, shoe sole materials, **and** inner sole materials for sports shoes, and golf balls as balls for ball sports. In the field of vibration-proofing rubber materials, the curable composition of the present invention can be used in automotive vibration-proofing rubber materials, railroad car vibration-proofing rubber materials, aircraft vibration-proofing rubber materials, **and** fenders. In the fields of marine applications and civil engineering, the curable composition of the present invention can be used in rubber expansion joints, supports, waterstops, waterproof sheets, rubber dams, elastic pavements, vibration-proofing pads, **and** protectors as structural materials, rubber molds, rubber packers, rubber skirts, sponge mats, mortar hoses, **and** mortar strainers as construction subsidiary materials, rubber sheets, air hoses as construction auxiliary materials, rubber buoys, **and** wave-dissipating materials as safety products, oil fences, silt fences, antifouling materials, marine hoses, dredging hoses, **and** oil skimmers as environmental protection products. Other examples of applications include rubber plates, mats and foamed plates.

### EXAMPLES

The following provides an explanation of specific examples according to the present invention in conjunction with comparative examples, but the present invention is not limited to the following examples. In the following examples and comparative examples, the terms "part(s)" and "%" refer to "part(s) by weight" and "% by weight", respectively. "Number average molecular weight" and "molecular weight distribution (ratio of weight average molecular weight to number average molecular weight)" were determined relative to polystyrene standards by using gel permeation chromatography (GPC). In GPC, columns packed with crosslinked polystyrene gels (Shodex® GPC K-804, K-802; Showa Denko K.K.) were used as the GPC columns, and chloroform was used as the GPC solvent.

In addition, the number of functional groups introduced per polymer molecule was calculated based on the concentration analyzed by ¹H-NMR and the number average molecular weight determined by GPC. Here, the Bruker ASX-400 spectrometer was used for NMR, deuterated chloroform was used for the solvent, and measurements were carried out at 23°C.

### Synthesis Example of Poly(n-butyl acrylate) Polymer Having Crosslinkable Silyl Group (Synthesis Example 1)

### (1) Polymerization Step

100 parts of n-butyl acrylate were deoxygenated. The inside of a stainless steel reaction vessel equipped with a stirrer was deoxygenated, and 0.84 parts of cuprous bromide and 20 parts of the deoxygenated n-butyl acrylate were charged therein followed by heating and stirring. 8.8 parts of acetonitrile and 3.5 parts of diethyl 2,5-dibromoadipate as an initiator were added and mixed, and after the temperature of the mixture was adjusted to about 80°C, 0.018 parts of pentamethyldiethylenetriamine (hereinafter abbreviated as triamine) were added to start a polymerization reaction. The remaining 80 parts of n-butyl acrylate were gradually added so that the polymerization reaction was allowed to proceed. During the course of polymerization, triamine was appropriately added to adjust the polymerization rate. The total amount of triamine used in polymerization was 0.15 parts. Since the internal temperature rose due to the heat of polymerization as polymerization proceeded, polymerization was allowed to proceed while the internal temperature was adjusted to about 80°C to about 90°C. Volatile matter was removed by vacuum distillation at the point where the monomer conversion rate (polymerization reaction rate) reached about 95% or higher, and a polymer concentrate was then obtained.

### (2) Diene Reaction Step

21 parts of 1,7-octadiene (hereinafter abbreviated as diene or octadiene) and 35 parts of acetonitrile were added to the above concentrate followed by the addition of 0.68 parts of triamine. The mixture was heated and stirred for a few hours while the internal temperature was adjusted to about 80°C to about 90°C, so that the octadiene was reacted with the end of the polymer.

### (3) Oxygen Treatment Step

A mixed gas of oxygen and nitrogen was introduced into the gas phase in the reaction vessel after the diene reaction was completed. The reaction mixture was heated and stirred for a few hours while the internal temperature was kept at about 80°C to about 90°C, so that the polymerization catalyst in the reaction mixture was allowed to contact the oxygen. The acetonitrile and unreacted octadiene were removed by vacuum distillation to obtain a concentrate containing the polymer. The concentrate was deeply colored.

### (4) First Partial Purification Step

Butyl acetate was used as a diluent solvent for the polymer. The concentrate was diluted with about 100 to 150 parts by weight of butyl acetate based on the weight of the polymer, and after adding a filtration aid and stirring, the insoluble catalyst component was removed by filtration. The filtrate was colored and turbid due to the polymerization catalyst residue.

### (5) Second Partial Purification Step

The filtrate was charged into a stainless steel reaction vessel equipped with a stirrer, and aluminum silicate (Kyowaad® 700SEN, Kyowa Chemical Industry Co., Ltd.) and hydrotalcite (Kyowaad® 500SH, Kyowa Chemical Industry Co., Ltd.) were added as adsorbents. A mixed gas of oxygen and nitrogen was introduced into the gas phase, and after heating and stirring for 1 hour at about 100°C, the adsorbents and other insoluble components were removed by filtration. The resulting filtrate was colored but clear. The filtrate was concentrated to obtain a partially purified polymer.

### (6) Dehalogenation Step (High-Temperature Heat Treatment Step)/Adsorption Purification Step

The partially purified polymer, a thermal stabilizer (Sumilizer® GS, Sumitomo Chemical Co., Ltd.) and adsorbents (Kyowaad® 700SEN, Kyowaad® 500SH) were added, followed by carrying out vacuum distillation, raising the temperature with heating and stirring, heating and stirring for about a few hours at a high temperature of about 170°C to about 200°C, and carrying out vacuum distillation to effect elimination of the halogen group in the polymer and adsorption purification. Adsorbents (Kyowaad® 700SEN, Kyowaad® 500SH) were further added, about 10 parts by weight of butyl acetate based on the weight of the polymer were added as a diluent solvent, and the gas phase was replaced by a mixed gas atmosphere of oxygen and nitrogen followed by further heating and stirring for about a few hours at a high temperature of 170°C to 200°C to continue adsorption purification. Following the adsorption treatment, the reaction mixture was diluted with 90 parts by weight of butyl acetate based on the weight of the polymer, and was then filtered to remove the adsorbents. The filtrate was concentrated to obtain a polymer having alkenyl groups at both ends.

### (7) Silylation Step

3.2 parts of methyldimethoxysilane (DMS), 1.6 parts of methyl orthoformate (MOF) and 0.0010 parts of a platinum catalyst (isopropanol solution of bis(1,3-divinyl-1,1,3,3-tetramethyldisiloxane) platinum complex catalyst, hereinafter referred to as platinum catalyst) were mixed into the polymer obtained according to the above-mentioned method, followed by heating and stirring to about 100°C. After heating and stirring for about 1 hour, volatile matter such as unreacted DMS was distilled off under reduced pressure to obtain a polymer [P1] having methoxysilyl groups as crosslinkable silyl groups at both ends. The number average molecular weight of the resulting polymer [P1] was about 14,000, and the molecular weight distribution was 1.3. The average number of silyl groups introduced per polymer molecule was determined to be about 1.8 by ¹H-NMR analysis.

### Synthesis Example of Poly(n-butyl acrylate) Polymer Having Ultraviolet-Crosslinkable Groups at Both Ends (Synthesis Example 2)

### (1) Polymerization Step

100 parts of n-butyl acrylate were deoxygenated. The inside of a stainless steel reaction vessel equipped with a stirrer was deoxygenated, and 0.42 parts of cuprous bromide and 20 parts of the deoxygenated n-butyl acrylate were charged therein followed by heating and stirring. 8.8 parts of acetonitrile and 3.5 parts of diethyl 2, 5-dibromoadipate as an initiator were added and mixed, and after the temperature of the mixture was adjusted to about 80°C, 0.018 parts of pentamethyldiethylenetriamine (hereinafter abbreviated as triamine) were added to start a polymerization reaction. The remaining 80 parts of n-butyl acrylate were gradually added so that the polymerization reaction was allowed to proceed. During the course of polymerization, triamine was appropriately added to adjust the polymerization rate. The total amount of triamine used in polymerization was 0.17 parts. Since the internal temperature rose due to the heat of polymerization as polymerization proceeded, polymerization was allowed to proceed while the internal temperature was adjusted to 80°C to 90°C. A mixed gas of oxygen and nitrogen was introduced into the gas phase in the reaction vessel at the point where the monomer conversion rate (polymerization reaction rate) reached about 95% or higher. The reaction mixture was heated and stirred for a few hours while the internal temperature was kept at about 80°C to about 90°C, so that the polymerization catalyst in the reaction mixture was allowed to contact the oxygen. The acetonitrile and unreacted monomer were removed by vacuum distillation to obtain a concentrate containing the polymer. The concentrate was deeply colored.

### (2) Purification Step

Butyl acetate was used as a diluent solvent for the polymer. The concentrate was diluted with about 100 parts by weight of butyl acetate based on the weight of the polymer, followed by the addition of a filtration aid, heat treatment and filtration. Then, adsorbents (Kyowaad® 700SEN, Kyowaad® 500SH) were added to the filtrate followed by filtration to obtain a clear liquid. The filtrate was concentrated to obtain a nearly colorless, transparent polymer.

### (3) Acryloyl Group Introduction Step

The polymer was dissolved in about 100 parts by weight of N,N-dimethylacetamide (DMAC) based on the weight of the polymer, followed by the addition of potassium acrylate (about 2 molar equivalents relative to the terminal Br group), a thermal stabilizer (H-TEMPO: 4-hydroxy-2,2,6,6-tetramethylpiperidine-n-oxyl) and an adsorbent (Kyowaad® 700SEN) and heating and stirring for a few hours at about 70°C. After distilling off the DMAC under reduced pressure, the resulting polymer concentrate was diluted with about 100 parts by weight of butyl acetate based on the weight of the polymer, a filtration aid was added and the solids were filtered out. The filtrate was concentrated to obtain a polymer [P2] having acryloyl groups as ultraviolet-crosslinkable groups at both ends. The number average molecular weight of the resulting polymer [P2] was about 12,000, and the molecular weight distribution was 1.1. The average number of acryloyl groups introduced per polymer molecule was determined to be about 1.9 by ¹H-NMR analysis.

### Synthesis Example of Poly(n-butyl acrylate) Polymer Having Ultraviolet-Crosslinkable Group at One End (Synthesis Example 3)

### (1) Polymerization Step

100 parts of n-butyl acrylate were deoxygenated. The inside of a stainless steel reaction vessel equipped with a stirrer was deoxygenated, and 0. 42 parts of cuprous bromide and 20 parts of the deoxygenated n-butyl acrylate were charged therein followed by heating and stirring. 8.8 parts of acetonitrile and 1.9 parts of ethyl α-bromobutyrate as an initiator were added and mixed, and after the temperature of the mixture was adjusted to about 80°C, 0.018 parts of pentamethyldiethylenetriamine (hereinafter abbreviated as triamine) were added to start a polymerization reaction. The remaining 80 parts of n-butyl acrylate were gradually added so that the polymerization reaction was allowed to proceed. During the course of polymerization, triamine was appropriately added to adjust the polymerization rate. The total amount of triamine used in polymerization was 0.12 parts. Since the internal temperature rose due to the heat of polymerization as polymerization proceeded, polymerization was allowed to proceed while the internal temperature was adjusted to about 80°C to about 90°C. A mixed gas of oxygen and nitrogen was introduced into the gas phase in the reaction vessel at the point where the monomer conversion rate (polymerization reaction rate) reached about 95% or higher. The reaction mixture was heated and stirred for a few hours while the internal temperature was kept at 80°C to 90°C, so that the polymerization catalyst in the reaction mixture was allowed to contact the oxygen. The acetonitrile and unreacted monomer were removed by vacuum distillation to obtain a concentrate containing the polymer. The concentrate was deeply colored.

### (2) Purification Step

Butyl acetate was used as a diluent solvent for the polymer. The concentrate was diluted with about 100 parts by weight of butyl acetate based on the weight of the polymer, followed by the addition of a filtration aid, heat treatment and filtration. Then, adsorbents (Kyowaad® 700SEN, Kyowaad® 500SH) were added to the filtrate followed by filtration to obtain a clear liquid. The filtrate was concentrated to obtain a nearly colorless, transparent polymer.

### (3) Acryloyl Group Introduction Step

The polymer was dissolved in about 100 parts by weight of N,N-dimethylacetamide (DMAC) based on the weight of the polymer, followed by the addition of potassium acrylate (about 2 molar equivalents relative to the terminal Br group), a thermal stabilizer (H-TEMPO: 4-hydroxy-2,2,6,6-tetramethylpiperidine-n-oxyl) and an adsorbent (Kyowaad® 700SEN) and heating and stirring for a few hours at about 70°C. After distilling off the DMAC under reduced pressure, the resulting polymer concentrate was diluted with about 100 parts by weight of butyl acetate based on the weight of the polymer, a filtration aid was added and the solids were filtered out. The filtrate was concentrated to obtain a polymer [P3] having an acryloyl group as an ultraviolet-crosslinkable group at one end. The number average molecular weight of the resulting polymer [P3] was about 12,000, and the molecular weight distribution was 1.1. The average number of acryloyl groups introduced per polymer molecule was determined to be about 0.9 by ¹H-NMR analysis.

### (Example 1)

A curable composition was prepared by adequately stirring and mixing by hand 100 parts of the polymer [P1] obtained in Synthesis Example 1 with 150 parts of the polymer [P2] obtained in Synthesis Example 2, 0.25 parts of Darocur® 1173 (2-hydroxy-2-methyl-1-phenyl-1-propan-1-one, Ciba Japan K.K.) and 0.125 parts of Irgacure® 819 (bis(2,4,6-trimethylbenzoyl), Ciba Japan K.K.) as ultraviolet polymerization initiators, 3 parts of Versatic® 10 (versatic acid, Japan Epoxy Resin) as an organic acid, 3 parts of Sila-Ace® S340 (N-(1,3-dimethylbutylidene)-3-(triethoxysilyl)-1-propaneamine, Chisso Corp.) as a ketimine compound, 1.3 parts of A171 (vinyltrimethoxysilane, Momentive Performance Materials, Inc.) as a dehydrating agent, 5 parts of Naugard® 445 (amine antioxidant, Shiraishi Calcium Kaisha, Ltd.) as an antioxidant, and 75 parts of Viscoat #260 (1,9-nonanediol diacrylate, Osaka Organic Chemical Industry, Ltd.) as a reactive diluent. As to the initial properties, this curable composition was applied to a thickness of about 1 mm and then irradiated using an ultraviolet irradiation apparatus (Light Hammer® 6, Fusion UV Systems Japan K.K.) at a peak irradiance of 1300 mW/cm² and a cumulative dose of 3000 mJ/cm² to give a cured product. A separate coating having a thickness of about 1 mm was allowed to stand as is without irradiation with ultraviolet light, and after 24 hours, moisture curing was allowed to proceed to give a cured product. In addition, when the curable composition was sealed and stored for 2 weeks at 50°C followed by carrying out a similar curability experiment, a cured product was obtained not only after ultraviolet irradiation but also after 24 hours in the absence of ultraviolet irradiation.

### (Example 2)

A curable composition was obtained in the same manner as Example 1 with the exception of using 2 parts of the ketimine compound (Sila-Ace® S340). When a similar experiment was conducted to confirm curability, in the case that the curable composition was in the initial state after preparation, a cured product was obtained, as in Example 1, both after irradiation with ultraviolet light and in the absence of ultraviolet irradiation, and also in the case that the curable composition had been stored for 24 hours at 80°C, a cured product was obtained both after ultraviolet irradiation and without ultraviolet irradiation.

### (Example 3)

A curable composition was obtained by adequately stirring and mixing by hand 100 parts of the polymer [P1] obtained in Synthesis Example 1 with 100 parts of the polymer [P2] obtained in Synthesis Example 2, 0.2 parts of Darocur® 1173 (2-hydroxy-2-methyl-1-phenyl-1-propan-1-one, Ciba Japan K.K.) and 0.1 parts of Irgacure® 819 (bis(2,4,6-trimethylbenzoyl), Ciba Japan K.K.) as ultraviolet polymerization initiators, 2.4 parts of Versatic® 10 (versatic acid, Japan Epoxy Resin) as an organic acid, 2.4 parts of Sila-Ace® S340 (N-(1,3-dimethylbutylidene)-3-(triethoxysilyl)-1-propaneamine, Chisso Corp.) as a ketimine compound, 1 part of A171 (vinyltrimethoxysilane, Momentive Performance Materials, Inc.) as a dehydrating agent, 4 parts of Naugard® 445 (amine antioxidant, Shiraishi Calcium Kaisha, Ltd.) as an antioxidant, and 60 parts of Viscoat #260 (1,9-nonanediol diacrylate, Osaka Organic Chemical Industry, Ltd.) as a reactive diluent. When a similar experiment was conducted to confirm curability, in the case that the curable composition was in the initial state after preparation, a cured product was obtained, as in Example 1, both after irradiation with ultraviolet light and without ultraviolet irradiation, and also in the case that the curable composition had been stored for 24 hours at 80°C, a cured product was obtained both after ultraviolet irradiation and without ultraviolet irradiation.

### (Example 4)

A curable composition was obtained by adequately stirring and mixing by hand 100 parts of the polymer [P1] obtained in Synthesis Example 1 with 200 parts of the polymer [P2] obtained in Synthesis Example 2, 200 parts of a polyether polymer having a crosslinkable silyl group (SAT 010, Kaneka Corp.), 0.5 parts of Darocur® 1173 (2-hydroxy-2-methyl-1-phenyl-1-propan-1-one, Ciba Japan K.K.) and 0.25 parts of Irgacure® 819 (bis(2,4,6-trimethylbenzoyl), Ciba Japan K.K.) as ultraviolet polymerization initiators, 6 parts of Versatic® 10 (versatic acid, Japan Epoxy Resin) as an organic acid, 6 parts of Sila-Ace® S340 (N-(1,3-dimethylbutylidene)-3-(triethoxysilyl)-1-propaneamine, Chisso Corp.) as a ketimine compound, 2.5 parts of A171 (vinyltrimethoxysilane, Momentive Performance Materials, Inc.) as a dehydrating agent, 10 parts of Naugard® 445 (amine antioxidant, Shiraishi Calcium Kaisha, Ltd.) as an antioxidant, and 100 parts of Viscoat #260 (1,9-nonanediol diacrylate, Osaka Organic Chemical Industry, Ltd.) as a reactive diluent. When a similar experiment was conducted to confirm curability, in the case that the curable composition was in the initial state after preparation, a cured product was obtained, as in Example 1, both after irradiation with ultraviolet light and without ultraviolet irradiation, and also in the case that the curable composition had been stored for 2 weeks at 50°C, a cured product was obtained both after ultraviolet irradiation and without ultraviolet irradiation.

### (Comparative Example 1)

A curable composition was obtained in the same manner as Example 1 with the exception of using 1 part of A1100 (γ-aminopropyltriethoxysilane, Momentive Performance Materials, Inc.) as an amine compound instead of the ketimine compound. In the case that the curable composition was in the initial state after preparation, a cured product was obtained both after irradiation with ultraviolet light and without ultraviolet irradiation; however, in the case that the curable composition had been stored for 2 weeks at 50°C, although a cured product was obtained after ultraviolet irradiation, the curable composition was unable to be cured in the absence of ultraviolet irradiation and remained liquid even after 24 hours had elapsed.

### (Comparative Example 2)

A curable composition was obtained by adequately stirring and mixing by hand 100 parts of the polymer [P1] obtained in Synthesis Example 1 with 82.5 parts of the polymer [P2] obtained in Synthesis Example 2, 82.5 parts of the polymer [P3] obtained in Synthesis Example 3, 0.33 parts of Darocur® 1173 (2-hydroxy-2-methyl-1-phenyl-1-propan-1-one, Ciba Japan K.K.) and 0.17 parts of Irgacure® 819 (bis(2,4,6-trimethylbenzoyl), Ciba Japan K.K.) as ultraviolet polymerization initiators, 1.7 parts of MSCAT-01 (tetravalent tin catalyst, reaction product of dibutyltin oxide and diisononyl phthalate, Nihon Kagaku Sangyo Co., Ltd.) as a tin catalyst, 1.7 parts of A171 (vinyltrimethoxysilane, Momentive Performance Materials, Inc.) as a dehydrating agent, and 6.6 parts of Naugard® 445 (amine antioxidant, Shiraishi Calcium Kaisha, Ltd.) as an antioxidant. When an experiment similar to Example 1 was conducted to confirm curability, in the case that the curable composition was in the initial state after preparation, a cured product was obtained, as in Example 1, both after irradiation with ultraviolet light and without ultraviolet irradiation; however, in the case that the curable composition had been stored for 72 hours at 50°C, a cured product was not obtained either immediately after irradiation with ultraviolet light or after 24 hours in the absence of ultraviolet irradiation.

### (Comparative Example 3)

A curable composition was obtained in the same manner as Comparative Example 2 with the exception of further adding 1.7 parts of A1110 (γ-aminopropyltrimethoxysilane, Momentive Performance Materials, Inc.) as an adhesion-imparting agent. When an experiment was conducted to confirm curability, even in the case that the curable composition was in the initial state after preparation, only the surface was cured while the inside remained uncured after irradiation with ultraviolet light. In the absence of ultraviolet irradiation, a cured product was obtained after 1 day as moisture curing was allowed to proceed. In the case that the curable composition had been stored for 72 hours at 50°C, the curable composition was unable to be cured immediately after irradiation with ultraviolet light, while a cured product was obtained after 24 hours in the absence of ultraviolet irradiation.

### (Comparative Example 4)

A curable composition was obtained in the same manner as Comparative Example 2 with the exception of using 1.7 parts of DBTDL (dibutyltin dilaurate, StannBL, Sankyo Organic Chemicals) instead of the MSCAT-01 used in Comparative Example 2. When an experiment was conducted to confirm curability, in the case that the curable composition was in the initial state after preparation, a cured product was obtained after irradiation with ultraviolet light; however, a cured product was not obtained even after 1 day in the absence of ultraviolet irradiation. In addition, in the case that the curable composition had been stored for 72 hours at 50°C, a cured product was obtained immediately after irradiation with ultraviolet light; however, a cured product was not obtained in the absence of ultraviolet irradiation.

### INDUSTRIAL APPLICABILITY

The present invention is able to provide a curable composition that can be cured rapidly by ultraviolet light and then is free of uncured portions even at locations not exposed to ultraviolet light, and does not show a decrease in curability after storage, and the curable composition is suitably used in electrical and electronic component materials such as conformal coating materials for printed circuit boards, solar cell back sealants, potting materials, sealing materials and adhesives.

## Claims

1. A curable composition, comprising: (I) a vinyl polymer having at least one crosslinkable silyl group on average, (II) a vinyl polymer having at least one ultraviolet-crosslinkable group on average, (III) an ultraviolet polymerization initiator, (IV) an organic acid, and (V) a ketimine compound.

2. The curable composition according to claim 1, wherein the crosslinkable silyl group is represented by general formula (1) :
-[Si(R¹)_{2-b}(Y)_{b}O]ₘ-Si(R²)₃₋ₐ(Y)ₐ (1)
wherein R¹ and R² may be the same or different and each represent an alkyl group having 1 to 20 carbon atoms, an aryl group having 6 to 20 carbon atoms, an aralkyl group having 7 to 20 carbon atoms, or a triorganosiloxy group represented by (R')₃SiO-(wherein R' represents a monovalent hydrocarbon group having 1 to 20 carbon atoms, and the plurality of R' s may be the same or different), and when two or more R¹s or R²s are present, they may be the same or different, Y represents a hydroxyl group or a hydrolyzable group, and when two or more Ys are present, they may be the same or different, a represents 0, 1, 2 or 3, b represents 0, 1 or 2, and m represents an integer of 0 to 19, provided that the relation: a + mb ≥ 1 is satisfied.

3. The curable composition according to claim 1 or 2, wherein the ultraviolet-crosslinkable group is represented by general formula (2):
-OC(O)C(R³)=CH₂ (2)
wherein R³ represents a hydrogen atom or an organic group having 1 to 20 carbon atoms.

4. The curable composition according to any of claims 1 to 3, wherein main chains of the vinyl polymers (I) and (II) are each produced by polymerizing mainly a (meth) acrylate monomer.

5. The curable composition according to claim 4, wherein the main chains of the vinyl polymers (I) and (II) are each produced by polymerizing mainly an acrylate monomer.

6. The curable composition according to any of claims 1 to 5, wherein main chains of the vinyl polymers (I) and (II) are each produced by living radical polymerization.

7. The curable composition according to claim 6, wherein the main chains of the vinyl polymers (I) and (II) are each produced by atom transfer radical polymerization.

8. The curable composition according to any of claims 1 to 7, wherein the crosslinkable silyl group of the vinyl polymer (I) is present at an end of a molecular chain thereof.

9. The curable composition according to any of claims 1 to 8, wherein the ultraviolet-crosslinkable group of the vinyl polymer (II) is present at an end of a molecular chain thereof.

10. The curable composition according to any of claims 1 to 9, wherein the organic acid (IV) is a fatty acid having 8 or more carbon atoms.

11. The curable composition according to any of claims 1 to 10, wherein the ketimine compound (V) is a ketimine compound obtained by reacting an aminosilane and a ketone.

12. The curable composition according to any of claims 1 to 11, comprising: 10 to 1000 parts by weight of the vinyl polymer (II) having at least one ultraviolet-crosslinkable group on average for each 100 parts by weight of the vinyl polymer (I) having at least one crosslinkable silyl group on average; 0.01 to 10 parts by weight of the ultraviolet polymerization initiator (III) for each 100 parts by weight of the vinyl polymer (II); 0.1 to 10 parts by weight of the organic acid (IV) for each 100 parts by weight of the vinyl polymer (I); and 0.1 to 10 parts by weight of the ketimine compound (V) for each 100 parts by weight of the vinyl polymer (I).

13. A cured product obtained from the curable composition according to any of claims 1 to 12.

## Patentansprüche

1. Härtbare Zusammensetzung, umfassend: (I) ein Vinylpolymer mit durchschnittlich wenigstens einer quervernetzbaren Silylgruppe, (II) ein Vinylpolymer mit durchschnittlich wenigstens einer UV-quervernetzbaren Gruppe, (III) ein UV-Polymerisationsinitiator, (IV) eine organische Säure und (V) eine Ketiminverbindung.

2. Härtbare Zusammensetzung nach Anspruch 1, wobei die quervernetzbare Silylgruppe durch eine allgemeine Formel (1) dargestellt wird:
- [Si(R¹)_{2-b}(Y)_{b}O]ₘ-Si(R²)₃₋ₐ(Y)ₐ (1)
wobei R¹ und R² gleich oder verschieden sein können und jeweils eine Alkylgruppe mit 1 bis 20 Kohlenstoffatomen, eine Arylgruppe mit 6 bis 20 Kohlenstoffatomen, eine Aralkylgruppe mit 7 bis 20 Kohlenstoffatomen oder eine durch (R')₃SiO- dargestellte Triorganosiloxygruppe darstellen (wobei R' eine einwertige Kohlenwasserstoffgruppe mit 1 bis 20 Kohlenstoffatomen darstellt und die mehreren R's gleich oder verschieden sein können) und wobei, wenn zwei oder mehr R¹s oder R²s vorhanden sind, diese gleich oder verschieden sein können, Y eine Hydroxylgruppe oder eine hydrolysierbare Gruppe darstellt und wobei, wenn 2 oder mehr Ys vorhanden sind, diese gleich oder verschieden sein können, a 0, 1, 2 oder 3 darstellt, b 0, 1 oder 2 darstellt und m eine ganze Zahl von 0 bis 19 darstellt, vorausgesetzt, dass die Relation: a + mb ≥ 1 erfüllt ist.

3. Härtbare Zusammensetzung nach Anspruch 1 oder 2, wobei die UVquervernetzbare Gruppe durch eine allgemeine Formel (2) dargestellt wird:
-OC(O)C(R³) = CH₂ (2)
wobei R³ ein Wasserstoffatom oder eine organische Gruppe mit 1 bis 20 Kohlenstoffatomen darstellt.

4. Härtbare Zusammensetzung nach einem der Ansprüche 1 bis 3, wobei die Hauptketten der Vinylpolymere (I) und (II) jeweils durch Polymerisieren hauptsächlich eines (Meth)acrylatmonomers hergestellt sind.

5. Härtbare Zusammensetzung nach Anspruch 4, wobei die Hauptketten der Vinylpolymere (I) und (II) jeweils durch Polymerisieren hauptsächlich eines Acrylatmonomers hergestellt sind.

6. Härtbare Zusammensetzung nach einem der Ansprüche 1 bis 5, wobei die Hauptketten der Vinylpolymere (I) und (II) jeweils durch lebende Radikalpolymerisation hergestellt sind.

7. Härtbare Zusammensetzung nach Anspruch 6, wobei die Hauptketten der Vinylpolymere (I) und (II) jeweils durch Atomtransferradikalpolymerisation hergestellt sind.

8. Härtbare Zusammensetzung nach einem der Ansprüche 1 bis 7, wobei die quervernetzbare Silylgruppe des Vinylpolymers (I) an einem Ende einer molekularen Kette davon vorhanden ist.

9. Härtbare Zusammensetzung nach einem der Ansprüche 1 bis 8, wobei die UVquervernetzbare Gruppe des Vinylpolymers (II) an einem Ende einer molekularen Kette davon vorhanden ist.

10. Härtbare Zusammensetzung nach einem der Ansprüche 1 bis 9, wobei die organische Säure (IV) eine Fettsäure mit 8 oder mehr Kohlenstoffatomen ist.

11. Härtbare Zusammensetzung nach einem der Ansprüche 1 bis 10, wobei die Ketiminverbindung (V) eine Ketiminverbindung ist, die durch Reagieren eines Aminosilans mit einem Keton erhalten ist.

12. Härtbare Zusammensetzung nach einem der Ansprüche 1 bis 11, umfassend: 10 bis 1000 Gewichtsanteile des Vinylpolymers (II) mit durchschnittlich wenigstens einer UV-quervernetzbaren Gruppe pro jeweils 100 Gewichtsanteilen des Vinylpolymers (I) mit durchschnittlich wenigstens einer quervernetzbaren Silylgruppe, 0,01 bis 10 Gewichtsanteile des UV-Polymerisationsinitiators (III) pro jeweils 100 Gewichtsanteilen des Vinylpolymers (II), 0,1 bis 10 Gewichtsanteilen der organischen Säure (IV) pro 100 Gewichtsanteilen des Vinylpolymers (I) und 0,1 bis 10 Gewichtsanteile der Ketiminverbindung (V) pro jeweils 100 Gewichtsanteilen des Vinylpolymers (I).

13. Gehärtetes Produkt, das aus der härtbaren Zusammensetzung nach einem der Ansprüche 1 bis 12 erhalten ist.

## Revendications

1. Composition durcissable, comprenant : (I) un polymère vinylique présentant au moins un groupe silyle réticulable en moyenne, (II) un polymère vinylique présentant au moins un groupe réticulable aux ultraviolets en moyenne, (III) un initiateur de polymérisation aux ultraviolets, (IV) un acide organique, et (V) un composé cétimine.

2. Composition durcissable selon la revendication 1, dans laquelle le groupe silyle réticulable est représenté par la formule générale (1) :
-[Si(R¹)_{2-b}(Y)_{b}O]ₘ-Si(R²)₃₋ₐ(Y)ₐ (1)
dans laquelle R¹ et R² peuvent être identiques ou différents et représentent chacun un groupe alkyle ayant de 1 à 20 atomes de carbone, un groupe aryle ayant de 6 à 20 atomes de carbone, un groupe aralkyle ayant de 7 à 20 atomes de carbone, ou un groupe triorganosiloxy représenté par (R')₃SiO-(où R' représente un groupe hydrocarboné monovalent ayant de 1 à 20 atomes de carbone, et les plusieurs R peuvent être identiques ou différents), et lorsque deux ou plusieurs R¹ ou R² sont présents, ils peuvent être identiques ou différents, Y représente un groupe hydroxyle ou un groupe hydrolysable, et lorsque deux ou plusieurs Y sont présents, ils peuvent être identiques ou différents, a représente 0, 1, 2 ou 3, b représente 0, 1 ou 2, et m représente un nombre entier de 0 à 19, à condition que la relation : a + mb ≥ 1 soit satisfaite.

3. Composition durcissable selon la revendication 1 ou 2, dans laquelle le groupe réticulable aux ultraviolets est représenté par la formule générale (2) :
-OC(O)C(R³)=CH₂ (2)
dans laquelle R³ représente un atome d'hydrogène ou un groupe organique ayant de 1 à 20 atomes de carbone.

4. Composition durcissable selon l'une quelconque des revendications 1 à 3, dans laquelle des chaînes principales des polymères vinyliques (I) et (II) sont chacune produites par polymérisation principalement d'un monomère de (méth)acrylate.

5. Composition durcissable selon la revendication 4, dans laquelle les chaînes principales des polymères vinyliques (I) et (II) sont chacune produites par polymérisation principalement d'un monomère d'acrylate.

6. Composition durcissable selon l'une quelconque des revendications 1 à 5, dans laquelle des chaînes principales des polymères vinyliques (I) et (II) sont chacune produites par polymérisation radicalaire vivante.

7. Composition durcissable selon la revendication 6, dans laquelle les chaînes principales des polymères vinyliques (I) et (II) sont chacune produites par polymérisation radicalaire par transfert d'atome.

8. Composition durcissable selon l'une quelconque des revendications 1 à 7, dans laquelle le groupe silyle réticulable du polymère vinylique (I) est présent à une extrémité d'une chaîne moléculaire de celui-ci.

9. Composition durcissable selon l'une quelconque des revendications 1 à 8, dans laquelle le groupe réticulable aux ultraviolets du polymère vinylique (II) est présent à une extrémité d'une chaîne moléculaire de celui-ci.

10. Composition durcissable selon l'une quelconque des revendications 1 à 9, dans laquelle l'acide organique (IV) est un acide gras ayant 8 atomes de carbone ou plus.

11. Composition durcissable selon l'une quelconque des revendications 1 à 10, dans laquelle le composé cétimine (V) est un composé cétimine obtenu par réaction d'un aminosilane et d'une cétone.

12. Composition durcissable selon l'une quelconque des revendications 1 à 11, comprenant : de 10 à 1 000 parties en masse du polymère vinylique (II) présentant au moins un groupe réticulable aux ultraviolets en moyenne pour chaque fois 100 parties en masse du polymère vinylique (I) présentant au moins un groupe silyle réticulable en moyenne ; de 0,01 à 10 parties en masse de l'initiateur de polymérisation aux ultraviolets (III) pour à chaque fois 100 parties en masse du polymère vinylique (II) ; de 0,1 à 10 parties en masse de l'acide organique (IV) pour à chaque fois 100 parties en masse du polymère vinylique (I) ; et de 0,1 à 10 parties en masse du composé cétimine (V) pour à chaque fois 100 parties en masse du polymère vinylique (I).

13. Produit durci obtenu à partir de la composition durcissable selon l'une quelconque des revendications 1 à 12.
